(19) Europäisches Patentamt
European Patent Office
Office européen des brevets

(11) **EP 3 583 148 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(21) Anmeldenummer: **18704559.6**

(22) Anmeldetag: **14.02.2018**

(51) Int Cl.:
***C08G 18/76*** *(2006.01)* ***C08G 59/40*** *(2006.01)*
***C08G 18/00*** *(2006.01)* ***C08G 18/20*** *(2006.01)*

(86) Internationale Anmeldenummer:
**PCT/EP2018/053612**

(87) Internationale Veröffentlichungsnummer:
**WO 2018/149844 (23.08.2018 Gazette 2018/34)**

(54) **POLYOXAZOLIDONE UND DEREN HERSTELLUNG**

POLYOXAZOLIDONES AND PRODUCTION OF THE SAME

POLYOXAZOLIDONE ET SA FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2017 EP 17000254**
**08.09.2017 EP 17190143**
**19.12.2017 EP 17208317**

(43) Veröffentlichungstag der Anmeldung:
**25.12.2019 Patentblatt 2019/52**

(73) Patentinhaber: **BASF SE**
**67056 Ludwigshafen am Rhein (DE)**

(72) Erfinder:
- **THOMAS, Hans-Josef**
  **67056 Ludwigshafen (DE)**
- **SCHUETTE, Markus**
  **49448 Lemfoerde (DE)**
- **ELING, Berend**
  **49448Lemfoerde (DE)**
- **MATT, Patrick**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A1-2015/173110** **US-A- 3 020 262**
**US-A- 4 564 651** **US-A- 4 658 007**
**US-A1- 2014 121 299** **US-A1- 2015 291 726**

Bemerkungen:
Die Akte enthält technische Angaben, die nach dem Eingang der Anmeldung eingereicht wurden und die nicht in dieser Patentschrift enthalten sind.

EP 3 583 148 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der vorliegenden Erfindung ist ein thermoplastisches Polymer auf der Basis von Diisocyanat und Diepoxid, das auch als Polyoxazolidon bezeichnet wird.

Die Herstellung von Polyoxazolidonen auf Basis von Diisocyanat und Diepoxid ist grundsätzlich bekannt. Dabei ist meist der Fokus auf vernetzte Strukturen gerichtet, wie sie beispielsweise in der DE 10 2014 226 838 A1 erwähnt werden. Dabei treten ausgehend vom Isocyanat und Epoxid eine Reihe von Nebenreaktionen auf, die sich nachteilig auf die thermoplastischen Eigenschaften der Polyoxozolidone auswirken.

Die Synthese linearer Polyoxazolidone wird in den Dokumenten WO 2015/173111 A1, WO 2015 / 173 110 A1, US 2014 / 012 1299, DE 10 2014 226 838 A1 und WO 2014/076024 A1 beschrieben. Die hier beschriebenen Katalysatoren beinhalten jedoch nicht die Verwendung von ionischen Flüssigkeiten als Katalysator.

Aufgabe der vorliegenden Erfindung war es daher thermoplastische Polyoxazolidone bereitzustellen, bei denen die Nebenreaktionen nur in geringem Maße auftreten, um so die Eigenschaften, insbesondere auch die thermoplastische Eigenschaft des Polyoxazolidons nicht nachteilig zu beeinflussen.

Überraschenderweise konnten die Produkteigenschaften, insbesondere auch die thermoplastische Eigenschaft von Polyoxazolidonen dadurch deutlich verbessert werden, dass das Polyoxazolidon mit einem geeigneten Katalysator, der auch im Endprodukt vorhanden sein kann, hergestellt wird.

Gegenstand der vorliegenden Erfindung ist somit ein Polymer hergestellt zumindest aus Diisocyanat, Diepoxid unter Verwendung eines Katalysators, wobei der Katalysator eine ionische Flüssigkeit ist.

Ein weiterer Gegenstand der Erfindung ist die Herstellung dieses Polymers und seine Verwendung.

Detaillierte Beschreibung

Diepoxide

Bei den Diepoxiden handelt es sich um Epoxide mit bevorzugt genau zwei Epoxidgruppen pro Molekül. Diese Epoxide können dabei sowohl gesättigt als auch ungesättigt, aliphatisch, cycloaliphatisch, aromatisch oder heterocyclisch sein. Sie können weiterhin solche Substituenten enthalten, die unter den Reaktionsbedingungen keine störenden Nebenreaktionen verursachen, beispielsweise Alkyl- oder Arylsubstituenten, Ethergruppierungen und dergleichen.

Vorzugsweise handelt es sich bei den Diepoxiden um Polyglycidylether auf der Basis von zweiwertigen Alkoholen, Phenolen, Hydrierungsprodukten dieser Phenole und/oder von Novolacken. Novolacke sind Umsetzungsprodukte von Phenolen mit Aldehyden, insbesondere Formaldehyd, in Gegenwart saurer Katalysatoren, besonders bevorzugt sind dabei die Diglycidylether. Möglich sind jedoch auch Diepoxide auf Basis von anderen Strukturen, welche keine Ethergruppen enthalten.

Andere bevorzugte Diepoxide basieren auf Diglycidylethern von natürlichen Rohstoffen, bevorzugt Cardanol. Ein typisches Beispiel für ein solches Produkt ist Cardolite NC 514 (Fa. Cardolite). Der Vorteil dieses Epoxids ist die längere Alkylkette zwischen den Aromaten die zu einer höheren Flexibilität der daraus hergestellten Polymere führt. Besonders wirken sich die Vorzüge von aliphatischen Strukturelementen in Kombination mit aromatischen Diglycidylethern aus. Daher sind Diepoxide basierend auf aliphatischen Diglycidylethern in Kombination mit aromatischen Diglycidylethern besonders bevorzugt.

Die Epoxidäquivalentgewichte (EEW) dieser Epoxidverbindungen liegen vorzugsweise zwischen 100 und 5000, insbesondere zwischen 150 und 500. Das Epoxidäquivalentgewicht einer Substanz ist dabei als diejenige Menge der Substanz (in Gramm) definiert, welche 1 Mol Oxiranringe enthält. Die Bestimmungsmethode ist in den Beispielen beschrieben.

Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt. Handelsübliche Produkte für Bisphenol A-Diglycidylethersind z.B DER 331, DER 330 der Fa. DOW U.S.A. oder Epilox A18-00 der Firma Leuna Harze, Deutschland.

Isocyanate

Vorliegend wird als Diisocyanat sowohl eine einzige Substanz als auch eine Mischung von Substanzen verstanden, die bevorzugt aus der nachfolgenden Aufzählung ausgewählt ist. Die Diisocyanate sind bevorzugt organische Isocyanate, weiter bevorzugt sind aliphatische, cycloaliphatische, araliphatische und/oder aromatische Isocyanate, die

weiter bevorzugt ausgewählt sind aus der Gruppe Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethylcyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat, 4,4'-, 2,4'- und 2,2'-Dicyclohexylmethan-diisocyanat (H12 MDI), 2,4-Paraphenylendiisocynat (PPDI), 2,4-Tetramethylenxylendiisocyant (TMXDI) bevorzugt 2,2'-, 2,4'- und/oder 4,4'-Diphenylmethandiisocyanat (MDI) und/oder 1,6-Hexamethylendiisocyanat (HDI). Bevorzugt sind aromatische Diisocyanate, die aus der obigen Liste ausgewählt sind. Weiter bevorzugt ist das Isocyant ausgewählt aus der Gruppe Toluylendiisocyanat (TDI), Diphenylmethandiisocyanat (MDI) und 1,5-Naphthylendiisocyanat (NDI). Ganz besonders bevorzugt sind Toluylendiisocyanat (TDI), oder Diphenylmethandiisocyanat (MDI).

Katalysator

Die für die Herstellung des thermoplastischen Polymers verwendeten Katalysatoren sind ionische Flüssigkeiten, Ionische Flüssigkeiten sind organische Salze, deren Ionen durch Ladungsdelokalisierung und sterische Effekte die Bildung eines stabilen Kristallgitters behindern. Bereits geringe thermische Energie genügt daher, um die Gitterenergie zu überwinden und die feste Kristallstruktur aufzubrechen. Es handelt sich somit um Salze, die bei Temperaturen unter 250 °C, bevorzugt unter 200°C und besonders bevorzugt unter 150 °C flüssig sind, ohne dass das Salz dabei in einem Lösungsmittel wie Wasser o.ä. gelöst ist.

Bevorzugt sind die Kationen der ionischen Flüssigkeit alkyliert und weiter bevorzugt aus der folgenden Gruppe ausgewählt: Imidazolium, Pyridinium, Pyrrolidinium, Guanidinium, Uronium, Thiouronium, Piperidinium, Morpholinium, Ammonium und Phosphonium. Bevorzugt sind die Anionen in der ionischen Flüssigkeit Halogenide oder komplexe Ionen, die bevorzugt ausgewählt sind aus der Gruppe: Tetrafluoroborat, Trifluoracetat, Triflat, Hexafluorophosphat, Phosphinat und Tosylat. In einer anderen bevorzugten Ausführungsform sind die Anionen organische Ionen, bevorzugt Imide oder Amide.

Ionische Flüssigkeiten im Sinne der vorliegenden Erfindung sind vorzugsweise Salze der allgemeinen Formel

(A) Salze der allgemeinen Formel (I)

$$[A]_n^+ \; [Y]^{n-} \qquad (I),$$

in der n für 1, 2, 3 oder 4 steht, $[A]^+$ für ein quartäres Ammonium-Kation, ein Oxonium-Kation, ein Sulfonium-Kation oder ein Phosphonium-Kation und $[Y]^{n-}$ für ein ein-, zwei-, drei- oder vierwertiges Anion steht; oder

(B) gemischte Salze der allgemeinen Formeln (II)

$$[A^1]^+[A^2]^+[Y]^{n-} \qquad (IIa),$$

wobei n = 2;

$$[A^1]^+[A^2]^+[A^3]^+ \; [Y]^{n-} \qquad (IIb),$$

wobei n = 3; oder

$$[A^1]^+[A^2]^+[A^3]^+[A^4]^+[Y]^{n-} \qquad (IIc),$$

wobei n = 4 und wobei $[A^1]^+$, $[A^2]^+$, $[A^3]^+$ und $[A^4]^+$ unabhängig voneinander aus den für $[A]^+$ genannten Gruppen ausgewählt sind und $[Y]^{n-}$ die unter (A) genannte Bedeutung besitzt; oder

(C) gemischte Salze der allgemeinen Formeln (III)

$$[A^1]^+[A^2]^+[A^3]^+[M1]^+[Y]^{n-} \qquad (IIIa),$$

wobei n = 4;

$$[A^1]^+[A^2]^+[M^1]^+[M^2]^+[Y]^{n-} \quad (IIIb),$$

wobei n = 4;

$$[A^1]^+[M^1]^+[M^2]^+[M^3]^+[Y]^{n-} \quad (IIIc),$$

wobei n = 4;

$$[A^1]^+[A^2]^+[M^1]^+[Y]^{n-} \quad (IIId),$$

wobei n = 3;

$$[A^1]^+[M^1]^+[M^2]^+[Y]^{n-} \quad (IIIe),$$

wobei n = 3;

$$[A^1]^+[M^1]^+[Y]^{n-} \quad (IIIf),$$

wobei n = 2;

$$[A^1]^+[A^2]^+[M^4]^{2+}[Y]^{n-} \quad (IIIg),$$

wobei n = 4;

$$[A^1]^+[M^1]^+[M^4]^{2+}[Y]^{n-} \quad (IIIh),$$

wobei n = 4;

$$[A^1]^+[M^5]^{3+}[Y]^{n-} \quad (IIIi),$$

wobei n = 4; oder

$$[A^1]^+[M^4]^{2+}[Y]^{n-} \quad (IIIj),$$

wobei n = 3 und wobei $[A^1]^+$, $[A^2]^+$ und $[A^3]^+$ unabhängig voneinander aus den für $[A]^+$ genannten Gruppen ausgewählt sind, $[Y]^{n-}$ die unter (A) genannte Bedeutung besitzt und $[M^1]^+$, $[M^2]^+$, $[M^3]^+$ einwertige Metallkationen, $[M^4]^{2+}$ zweiwertige Metallkationen und $[M^5]^{3+}$ dreiwertige Metallkationen bedeuten.

Verbindungen, die sich zur Bildung des Kations $[A]^+$ von ionischen Flüssigkeiten eignen, sind z. B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Hetero-zyklus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterozyklen beispielsweise

quaternisiert sein kann, sind $C_1$-$C_{18}$-Alkyl, bevorzugt $C_1$-$C_{10}$-Alkyl, besonders bevorzugt $C_1$-$C_6$-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterozyklus, insbesondere einen fünfgliedrigen Heterozyklus, enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterozyklus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterozyklen.

Besonders bevorzugte Verbindungen sind solche, die ein Molgewicht unter 1000 g/Mol aufweisen, ganz besonders bevorzugt unter 500 g/Mol.

Weiterhin sind solche Kationen bevorzugt, die ausgewählt sind aus den Verbindungen der Formeln (IVa) bis (IVx3),

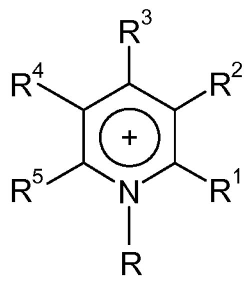

(IVa)

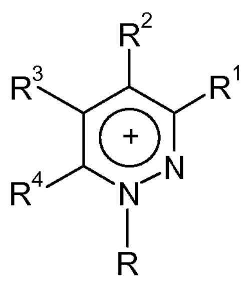

(IVb)

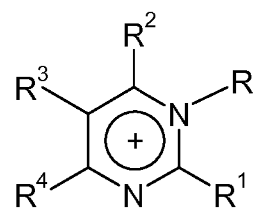

(IVc)

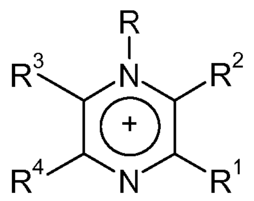

(IVd)

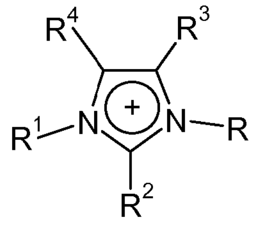

(IVe)

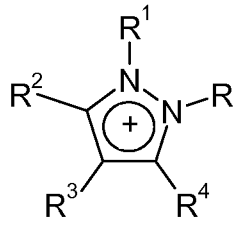

(IVf)

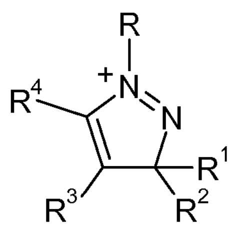

(IVg)

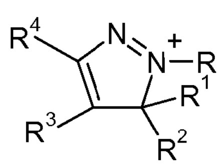

(IVg')

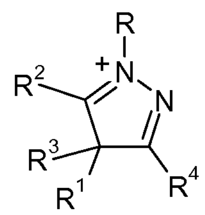

(IVh)

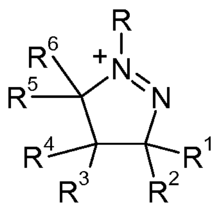
(IVi)

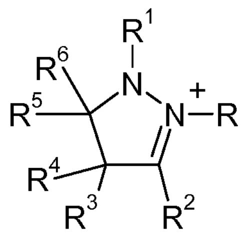
(IVj)

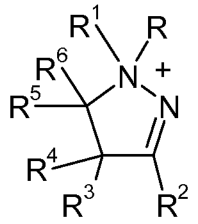
(IVj')

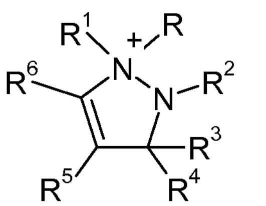
(IVk)

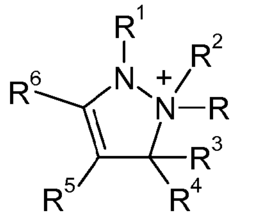
(IVk')

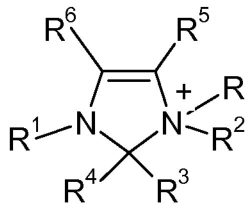
(IVl)

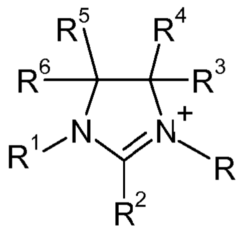
(IVm)

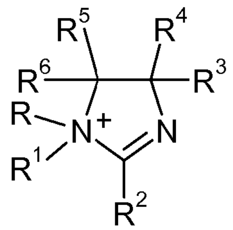
(IVm')

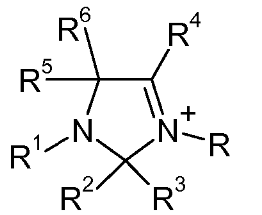
(IVn)

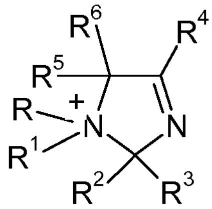
(IVn')

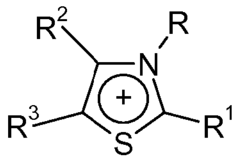
(IVo)

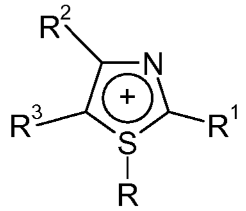
(IVo')

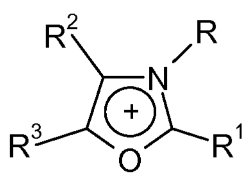
(IVp)

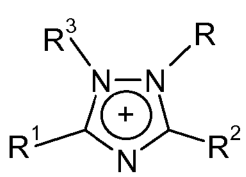
(IVq)

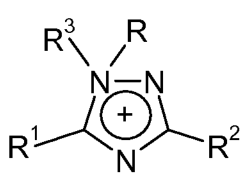
(IVq')

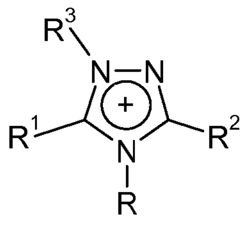
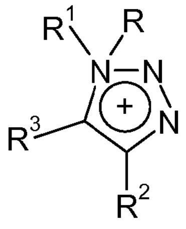
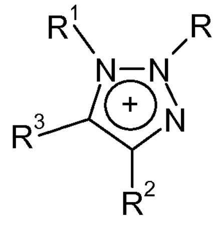

(IVq")          (IVr)          (IVr')

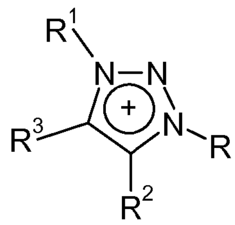
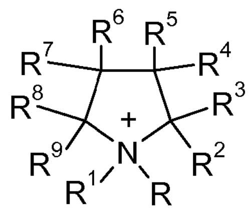
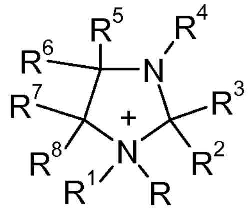

(IVr")          (IVs)          (IVt)

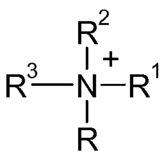
(IVu)

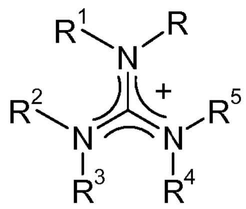
(IVv)

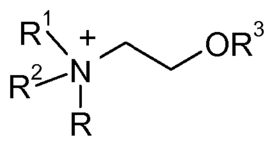
(IVw)

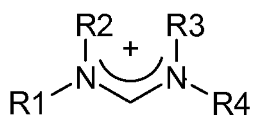
(IVx0)

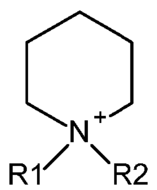
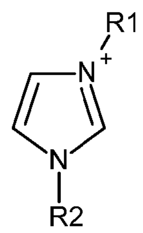
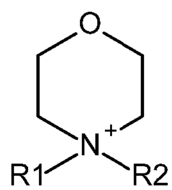

(IVx1)          (IVx2)          (IVx3)

sowie Oligomere, die diese Strukturen enthalten.

Weitere geeignete Kationen sind Verbindungen der allgemeinen Formel (IVy) und (IVz)

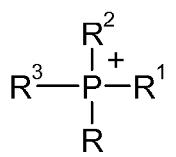
(IVy)

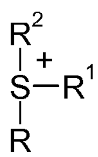
(IVz)

sowie Oligomere, die diese Struktur enthalten.

In den oben genannten Formeln (IVa) bis (IVz) stehen

- der Rest R für Wasserstoff, einen Kohlenstoff enthaltenden organischen, gesättigten oder ungesättigten, azyklischen oder zyklischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen; und
- die Reste $R^1$ bis $R^9$ unabhängig voneinander für Wasserstoff, eine Sulfo-Gruppe oder einen Kohlenstoff enthaltenden organischen, gesättigten oder ungesättigten, azyklischen oder zyklischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen, wobei die Reste $R^1$ bis $R^9$, welche in den oben genannten Formeln (IV) an ein Kohlenstoffatom (und nicht an ein Heteroatom) gebunden sind, zusätzlich auch für Halogen oder eine funktionelle Gruppe stehen können; oder
- zwei benachbarte Reste aus der Reihe $R^1$ bis $R^9$ zusammen auch für einen zwei-bindigen, Kohlenstoff enthaltenden organischen, gesättigten oder ungesättigten, azyklischen oder zyklischen, aliphatischen, aromatischen oder araliphatischen, unsubstituierten oder durch 1 bis 5 Heteroatome oder geeignete funktionelle Gruppen unterbrochenen oder substituierten Rest mit 1 bis 30 Kohlenstoffatomen.

Als Heteroatome kommen bei der Definition der Reste R und $R^1$ bis $R^9$ prinzipiell alle Heteroatome in Frage, welche in der Lage sind, formell eine $-CH_2-$, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, $-SO_2-$, -NR'-, -N=, -PR'-, $-PR'_2$ und $-SiR'_2-$ genannt, wobei es sich bei den Resten R' um den verbleibenden Teil des Kohlenstoff enthaltenden Rests handelt. Die Reste $R^1$ bis $R^9$ können dabei in den Fällen, in denen diese in den oben genannten Formeln (IV) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien - $NR_2'$, und -CN (Cyano) genannt. Funktionelle Gruppen und Heteroatome können auch direkt benachbart sein, so dass auch Kombinationen aus mehreren benachbarten Atomen, wie etwa - O- (Ether), -S- (Thioether), -COO- (Ester), oder -CONR'- (tertiäres Amid), mit umfasst sind, beispielsweise Di-($C_1$-$C_4$-Alkyl)-amino, $C_1$-$C_4$-Alkyloxycarbonyl oder $C_1$-$C_4$-Alkyloxy. Bei den Resten R' handelt es sich um den verbleibenden Teil des Kohlenstoff enthaltenden Restes.

Als bevorzugte Halogene seien Fluor, Chlor, Brom und Iod genannt.

Bevorzugt steht der Rest R für

- unverzweigtes oder verzweigtes, unsubstituiertes oder ein bis mehrfach mit Halogen, Phenyl, Cyano, substituiertes $C_1$-$C_{18}$-Alkyl mit insgesamt 1 bis 20 Kohlen-stoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl und Undecylfluorisopentyl;
- Glykole, Butylenglykole und deren Oligomere mit 1 bis 100 Einheiten und einem $C_1$-$C_8$-Alkyl als Endgruppe, wie beispielsweise $R^AO-(CHR^B-CH_2-O)_n-CHR^B-CH_2-$ oder $R^AO-(CH_2CH_2CH_2CH_2O)_n-CH_2CH_2CH_2CH_2O-$ mit $R^A$ und $R^B$ bevorzugt Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl;
- 1-Propen-1-yl, 1-Propen-2-yl und 1-Propen-3-yl; und
- N,N-Di-$C_1$-$C_6$-alkyl-amino, wie beispielsweise N,N-Dimethylamino und N,N-Diethylamino.

Besonders bevorzugt steht der Rest R für unverzweigtes und unsubstituiertes $C_1$-$C_{18}$-Alkyl, wie beispielsweise Methyl, Ethyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für $CH_3O-(CH_2CH_2O)_n-CH_2CH_2-$ und $CH_3CH_2O-(CH_2CH_2O)_n-CH_2CH_2-$ mit n gleich 0 bis 3.

Bevorzugt stehen die Reste $R^1$ bis $R^9$ unabhängig voneinander für

- Wasserstoff;

- Halogen;
- eine geeignete funktionelle Gruppe;
- gegebenenfalls durch geeignete funktionelle Gruppen, Aryl, Alkyl, Aryloxy, Alkyl-oxy, Halogen, Heteroatome und/oder Heterozyklen substituiertes und/oder durch ein oder mehrere Sauerstoff- und/oder Schwefelatome und/oder ein oder mehrere substituierte oder unsubstituierte Iminogruppen unterbrochenes $C_1$-$C_{18}$-Alkyl;
- gegebenenfalls durch geeignete funktionelle Gruppen, Aryl, Alkyl, Aryloxy, Alkyl-oxy, Halogen, Heteroatome und/oder Heterozyklen substituiertes und/oder durch ein oder mehrere Sauerstoff- und/oder Schwefelatome und/oder ein oder mehrere substituierte oder unsubstituierte Iminogruppen unterbrochenes $C_2$-$C_{18}$-Alkenyl;
- gegebenenfalls durch geeignete funktionelle Gruppen, Aryl, Alkyl, Aryloxy, Alkyl-oxy, Halogen, Heteroatome und/oder Heterozyklen substituiertes $C_6$-$C_{12}$-Aryl;
- gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cyclo-alkyl;
- gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cyclo-alkenyl; oder
- einen gegebenenfalls durch geeignete funktionelle Gruppen, Aryl, Alkyl, Aryloxy, Alkyloxy, Halogen, Heteroatome und/oder Heterozyklen substituierten fünf- bis sechsgliedrigen, Sauerstoff-, Stickstoff- und/oder Schwefelatome aufweisenden Heterozyklus bedeuten; oder zwei benachbarte Reste zusammen mit den Atomen, an welchen sie gebunden sind, für
- einen ungesättigten, gesättigten oder aromatischen, gegebenenfalls durch geeignete funktionelle Gruppen, Aryl, Alkyl, Aryloxy, Alkyloxy, Halogen, Heteroatome und/oder Heterozyklen substituierten und gegebenenfalls durch ein oder mehrere Sauerstoff- und/oder Schwefelatome und/oder ein oder mehrere substituierte oder unsubstituierte Iminogruppen unterbrochenen Ring.

Bei gegebenenfalls durch geeignete funktionelle Gruppen, Aryl, Alkyl, Aryloxy, Alkyloxy, Halogen, Heteroatome und/oder Heterozyklen substituiertem $C_1$-$C_{18}$-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethyl-pentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, a,a-Dimethylbenzyl, p-Tolyl-methyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycar-bonylethyl, 2-Butoxycarbonylpropyl, 1,2-Di-(methoxycarbonyl)-ethyl, Methoxy, Ethoxy, 1,3-Dioxolan-2-yl, 1,3-Dioxan-2-yl, 2-Methyl-1,3-dioxolan-2-yl, 4-Methyl-1,3-dioxolan-2-yl, 2-Dimethylaminoethyl, 2-Dimethylaminopropyl, 3-Dimethylaminopropyl, 4-Dimethyl-aminobutyl, 6-Dimethylaminohexyl, 2-Phenoxyethyl, 2-Phenoxypropyl, 3-Phenoxypro-pyl, 4-Phenoxybutyl, 6-Phenoxyhexyl, 2-Methoxyethyl, 2-Methoxypropyl, 3-Methoxy-propyl, 4-Methoxybutyl, 6-Methoxyhexyl, 2-Ethoxyethyl, 2-Ethoxypropyl, 3-Ethoxypro-pyl, 4-Ethoxybutyl, 6-Ethoxyhexyl, $C_nF_{2(n-a)+(1-b)}H_{2a+b}$ mit n gleich 1 bis 30, $0 \leq a \leq n$ und b = 0 oder 1 (beispielsweise $CF_3$, C2$F_5$, $CH_2CH_2$-$C_{(n-2)}F_{2(n-2)+1}$, $C_6F_{13}$, $C_8F_{17}$, $C_{10}F_{21}$, $C_{12}F_{25}$), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxy-propyl, 2-Octyloxyethyl, 2-Methoxyisopropyl, 2-(Methoxycarbonyl)-methyl, 2-(Ethoxy-carbonyl)-methyl, 2-(n-Butoxycarbonyl)-methyl, Butylthiomethyl, 2-Dodecylthioethyl, 2-Phenylthioethyl, 5-Methoxy-3-oxa-pentyl, 8-Methoxy-3,6-dioxaoctyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-dioxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bei gegebenenfalls durch geeignete funktionelle Gruppen, Aryl, Alkyl, Aryloxy, Alkyl-oxy, Halogen, Heteroatome und/oder Heterozyklen substituiertes und/oder durch ein oder mehrere Sauerstoff- und/oder Schwefelatome und/oder ein oder mehrere substituierte oder unsubstituierte Iminogruppen unterbrochenes $C_2$-$C_{18}$-Alkenyl handelt es sich bevorzugt um Vinyl, 2-Propenyl, 3-Butenyl, cis-2-Butenyl, trans-2-Butenyl oder $C_nF_{2(n-a)-(1-b)}H_{2a-b}$ mit $n \leq 30$, $0 \leq a \leq n$ und b = 0 oder 1.

Bei gegebenenfalls durch geeignete funktionelle Gruppen, Aryl, Alkyl, Aryloxy, Alkyl-oxy, Halogen, Heteroatome und/oder Heterozyklen substituiertes $C_6$-$C_{12}$-Aryl handelt es sich bevorzugt um Phenyl, Tolyl, Xylyl, $\alpha$-Naphthyl, $\beta$-Naphthyl, 4-Diphenylyl, Chlor-phenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dode-cylphenyl, Methoxyphenyl, Dimethoxyphenyl, Ethoxyphenyl, Hexyloxyphenyl, Methyl-naphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitro-phenyl, 4-Nitrophenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropyl-thiophenyl oder tert.-Butylthiophenyl oder $C_6F_{(5-a)}H_a$ mit $0 \leq a \leq 5$.

Bei gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl,

$C_nF_{2(n-a)-(1-b)}H_{2a-b}$ mit $n \leq 30$, $0 \leq a \leq n$ und b = 0 oder 1 sowie ein gesättigtes oder unge-sättigtes bizyklisches System wie z. B. Norbornyl oder Norbornenyl.

Bei gegebenenfalls durch geeignete funktionelle Gruppen, Aryl, Alkyl, Aryloxy, Alkyl-oxy, Halogen, Heteroatome und/oder Heterozyklen substituiertes $C_5$-$C_{12}$-Cycloalkenyl handelt es sich bevorzugt um 3-Cyclopentenyl, 2-Cyclohexenyl, 3-Cyclohexenyl, 2,5-Cyclohexadienyl oder $C_nF_{2(n-a)-3(1-b)}H_{2a-3b}$ mit $n \leq 30$, $0 \leq a \leq n$ und b = 0 oder 1.

Bei einen gegebenenfalls durch geeignete funktionelle Gruppen, Aryl, Alkyl, Aryloxy, Alkyloxy, Halogen, Heteroatome und/oder Heterozyklen substituierten fünf- bis sechsgliedrigen, Sauerstoff-, Stickstoff- und/oder Schwefelatome aufweisenden Heterozyklus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch geeignete funktionelle Gruppen, Aryl, Alkyl, Aryloxy, Alkyloxy, Halogen, Heteroatome und/oder Heterozyklen substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

Besonders bevorzugt stehen die Reste $R^1$ bis $R^9$ unabhängig voneinander für

- Wasserstoff;
- unverzweigtes oder verzweigtes, unsubstituiertes oder ein bis mehrfach mit Halogen, Phenyl, Cyano, $C_1$-$C_6$-Alkoxycarbonyl und/oder substituiertes $C_1$-$C_{18}$-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenyl-propyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluor-ethyl, Heptafluorpropyl, Heptafluorisopropyl, Nonafluorbutyl, Nonafluorisobutyl, Undecylfluorpentyl und Undecylfluorisopentyl;
- Glykole, Butylenglykole und deren Oligomere mit 1 bis 100 Einheiten und einem $C_1$- bis $C_8$-Alkyl als Endgruppe, wie beispielsweise $R^AO$-$(CHR^B$-$CH_2$-$O)_n$-$CHR^B$-$CH_2$- oder $R^AO$-$(CH_2CH_2CH_2CH_2O)_n$-$CH_2CH_2CH_2CH_2O$- mit $R^A$ und $R^B$ bevorzugt Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl;
- 1-Propen-1yl, 1-Propen-2-yl und 1-Propen-3yl; und
- N,N-Di-$C_1$-$C_6$-alkyl-amino, wie beispielsweise N,N-Dimethylamino und N,N-Diethylamino,

wobei wenn IIIw für III steht, dann steht $R^3$ nicht für Wasserstoff.

Ganz besonders bevorzugt stehen die Reste $R^1$ bis $R^9$ unabhängig voneinander für Wasserstoff oder $C_1$-$C_{18}$-Alkyl, wie beispielsweise Methyl, Ethyl, 1-Butyl, 1-Pentyl, 1-Hexyl, 1-Heptyl, 1-Octyl, für Phenyl, für 2-Cyanoethyl, für 2-(Methoxycarbonyl)ethyl, für 2-(Ethoxycarbonyl)ethyl, für 2-(n-Butoxycarbonyl)ethyl, für N,N-Dimethylamino, für N,N-Diethylamino, für Chlor sowie für $CH_3O$-$(CH_2CH_2O)_n$-$CH_2CH_2$- und $CH_3CH_2O$-$(CH_2CH_2O)_n$-$CH_2CH_2$- mit n gleich 0 bis

3, wobei wenn IIIw für III steht, dann steht $R^3$ nicht für Wasserstoff.

Ganz besonders bevorzugt setzt man als Pyridiniumionen (IVa) solche ein, bei denen

- einer der Reste $R^1$ bis $R^5$ Methyl, Ethyl oder Chlor ist und die verbleibenden Reste $R^1$ bis $R^5$ Wasserstoff sind;
- $R^3$ Dimethylamino ist und die verbleibenden Reste $R^1$, $R^2$, $R^4$ und $R^5$ Wasserstoff sind;
- alle Reste $R^1$ bis $R^5$ Wasserstoff sind;
- $R^1$ und $R^2$ oder $R^2$ und $R^3$ 1,4-Buta-1,3-dienylen ist und die verbleibenden Reste $R^1$, $R^2$, $R^4$ und $R^5$ Wasserstoff sind;

und insbesondere solche, bei denen

- $R^1$ bis $R^5$ Wasserstoff sind; oder
- einer der Reste $R^1$ bis $R^5$ Methyl oder Ethyl ist und die verbleibenden Reste $R^1$ bis $R^5$ Wasserstoff sind.

Als ganz besonders bevorzugte Pyridiniumionen (IVa) seien genannt 1-Methylpyridini-um, 1-Ethylpyridinium, 1-(1-Butyl)pyridinium, 1-(1-Hexyl)pyridinium, 1-(1-Octyl)pyridini-um, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethyl-pyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethylpyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium und 1-(1-Hexa-decyl)-2-methyl-3-ethyl-pyridinium.

Ganz besonders bevorzugt setzt man als Pyridaziniumionen (IVb) solche ein, bei denen

- $R^1$ bis $R^4$ Wasserstoff sind; oder
- einer der Reste $R^1$ bis $R^4$ Methyl oder Ethyl ist und die verbleibenden Reste $R^1$ bis $R^4$ Wasserstoff sind.

Ganz besonders bevorzugt setzt man als Pyrimidiniumionen (IVc) solche ein, bei denen

- $R^1$ Wasserstoff, Methyl oder Ethyl ist und $R^2$ bis $R^4$ unabhängig voneinander Wasserstoff oder Methyl sind; oder
- $R^1$ Wasserstoff, Methyl oder Ethyl ist, $R^2$ und $R^4$ Methyl sind und $R^3$ Wasserstoff ist.

Ganz besonders bevorzugt setzt man als Pyraziniumionen (IVd) solche ein, bei denen

- $R^1$ Wasserstoff, Methyl oder Ethyl ist und $R^2$ bis $R^4$ unabhängig voneinander Wasserstoff oder Methyl sind;
- $R^1$ Wasserstoff, Methyl oder Ethyl ist, $R^2$ und $R^4$ Methyl sind und $R^3$ Wasserstoff ist;
- $R^1$ bis $R^4$ Methyl sind; oder
- $R^1$ bis $R^4$ Wasserstoff sind.

Ganz besonders bevorzugt setzt man als Imidazoliumionen (IVe) solche ein, bei denen

- $R^1$ Wasserstoff, Methyl, Ethyl, 1-Propyl, 1-Butyl, 1-Pentyl, 1-Hexyl, 1-Octyloder 2-Cyanoethyl und $R^2$ bis $R^4$ unabhängig voneinander Wasserstoff, Methyl oder Ethyl sind.

Als ganz besonders bevorzugte Imidazoliumionen (IVe) seien genannt 1-Methylimidazolium, 1-Ethylimidazolium, 1-(1-Butyl)-imidazolium, 1-(1-Octyl)-imidazolium, 1-(1-Do-decyl)-imidazolium, 1-(1-Tetradecyl)-imidazolium, 1-(1-Hexadecyl)-imidazolium, 1,3-Di-methylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butylimidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Do-decyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimi-dazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimi-dazolium, 1,4-Dimethylimidazolium, 1,3,4-Trimethylimidazolium, 1,4-Dimethyl-3-ethyl-imidazolium, 3-butylimidazolium, 1,4-Dimethyl-3-octylimidazolium, 1,4,5-Trimethylimi-dazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 1-(Prop-1-en-3-yl)-3-methylimidazolium.

Die am meisten bevorzugten 1,3-Dialkyl-Imidazolium-Ion sind 1-Butyl-3-Methyl-Imidazoliumion und 1-Ethyl-3-Methylimidazoliumion.

Ganz besonders bevorzugt setzt man als Pyrazoliumionen (IVf), (IVg) beziehungsweise (IVg') solche ein, bei denen

- $R^1$ Wasserstoff, Methyl oder Ethyl ist und $R^2$ bis $R^4$ unabhängig voneinander Wasserstoff oder Methyl sind.

Ganz besonders bevorzugt setzt man als Pyrazoliumionen (IVh) solche ein, bei denen

- $R^1$ bis $R^4$ unabhängig voneinander Wasserstoff oder Methyl sind.

Ganz besonders bevorzugt setzt man als 1-Pyrazoliniumionen (IVi) solche ein, bei denen

- unabhängig voneinander $R^1$ bis $R^6$ Wasserstoff oder Methyl sind.

Ganz besonders bevorzugt setzt man als 2-Pyrazoliniumionen (IVj) beziehungsweise (IVj') solche ein, bei denen

- $R^1$ Wasserstoff, Methyl, Ethyl oder Phenyl ist und $R^2$ bis $R^6$ unabhängig voneinander Wasserstoff oder Methyl sind.

Ganz besonders bevorzugt setzt man als 3-Pyrazoliniumionen (IVk) beziehungsweise (IVk') solche ein, bei denen

- $R^1$ und $R^2$ unabhängig voneinander Wasserstoff, Methyl, Ethyl oder Phenyl sind und $R^3$ bis $R^6$ unabhängig voneinander Wasserstoff oder Methyl sind.

Ganz besonders bevorzugt setzt man als Imidazoliniumionen (IVl) solche ein, bei denen

- $R^1$ und $R^2$ unabhängig voneinander Wasserstoff, Methyl, Ethyl, 1-Butyl oder Phenyl sind, $R^3$ und $R^4$ unabhängig voneinander Wasserstoff, Methyl oder Ethyl sind und $R^5$ und $R^6$ unabhängig voneinander Wasserstoff oder Methyl sind.

Ganz besonders bevorzugt setzt man als Imidazoliniumionen (IVm) beziehungsweise (IVm') solche ein, bei denen

- $R^1$ und $R^2$ unabhängig voneinander Wasserstoff, Methyl oder Ethyl sind und $R^3$ bis $R^6$ unabhängig voneinander Wasserstoff oder Methyl sind.

Ganz besonders bevorzugt setzt man als Imidazoliniumionen (IVn) beziehungsweise (IVn') solche ein, bei denen

- $R^1$ bis $R^3$ unabhängig voneinander Wasserstoff, Methyl oder Ethyl sind und $R^4$ bis $R^6$ unabhängig voneinander Wasserstoff oder Methyl sind.

Ganz besonders bevorzugt setzt man als Thiazoliumionen (IVo) beziehungsweise (IVo') sowie als Oxazoliumionen (IVp) solche ein, bei denen

- $R^1$ Wasserstoff, Methyl, Ethyl oder Phenyl ist und $R^2$ und $R^3$ unabhängig voneinander Wasserstoff oder Methyl sind.

Ganz besonders bevorzugt setzt man als 1,2,4-Triazoliumionen (IVq), (IVq') bezie-hungsweise (IVq") solche ein, bei denen

- $R^1$ und $R^2$ unabhängig voneinander Wasserstoff, Methyl, Ethyl oder Phenyl sind und $R^3$ Wasserstoff, Methyl oder Phenyl ist.

Ganz besonders bevorzugt setzt man als 1,2,3-Triazoliumionen (IVr), (IVr') beziehungsweise (IVr") solche ein, bei denen

- $R^1$ Wasserstoff, Methyl oder Ethyl ist und $R^2$ und $R^3$ unabhängig voneinander Wasserstoff oder Methyl sind, oder $R^2$ und $R^3$ zusammen 1,4-Buta-1,3-dienylen ist.

Ganz besonders bevorzugt setzt man als Pyrrolidiniumionen (IVs) solche ein, bei denen

- $R^1$ Wasserstoff, Methyl, Ethyl oder Phenyl ist und $R^2$ bis $R^9$ unabhängig voneinander Wasserstoff oder Methyl sind.

Ganz besonders bevorzugt setzt man als Imidazolidiniumionen (IVt) solche ein, bei denen

- $R^1$ und $R^4$ unabhängig voneinander Wasserstoff, Methyl, Ethyl oder Phenyl sind und $R^2$ und $R^3$ sowie $R^5$ bis $R^8$ unabhängig voneinander Wasserstoff oder Methyl sind.

Ganz besonders bevorzugt setzt man als Ammoniumionen (IVu) solche ein, bei denen

- $R^1$ bis $R^3$ unabhängig voneinander $C_1$- bis $C_{18}$-Alkyl sind; oder
- $R^1$ und $R^2$ zusammen 1,5-Pentylen oder 3-Oxa-1,5-pentylen sind und $R^3$ $C_1$-$C_{18}$-Alkyl oder 2-Cyanoethyl ist.

Als ganz besonders bevorzugte Ammoniumionen aus der Gruppe (IVu) seien genannt Methyltri-(1-butyl)-ammonium und Tetra(1-butyl)-ammonium; aus der Gruppe (IVx1) N,N-Dimethylpiperidinium und 1-Butyl-1-methylpiperidinium; aus der Gruppe (IVx2) 1-Ethly-3-methylimidazoinium; und aus der Gruppe IVx3 N,N-Dimethylmorpholinium.
Beispiele für die tertiären Amine, von denen sich die quatären Ammoniumionen der allgemeinen Formel (IVu) durch Quaternisierung mit den genannten Resten R ableiten, sind Diethyl-n-butylamin, Diethyl-tert-butylamin, Diethyl-n-pentylamin, Diethyl-hexyl-amin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Di-isopropylpentylamin, Di-iso-propylhexylamin, Di-isopropyloctylamin, Di-iso-propyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butyl-pyrrolidin, N-sek-Butylpyrrodidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzyl-amin, Di-n-butylbenzylamin, Diethylphenylamin, Di-n-Propylphenylamin und Di-n-Butyl-phenylamin.
Bevorzugte quartäre Ammoniumsalze der allgemeinen Formel (IVu) sind solche, die sich von folgenden tertiären Aminen durch Quarternisierung mit den genannten Resten R ableiten lassen, wie Di-iso-propylethylamin, Diethyl-tert-butylamin, Di-iso-propylbutyl-amin, Di-n-butyl-n-pentylamin, N,N-Di-n-butylcyclohexylamin sowie tertiäre Amine aus Pentylisomeren.
Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.
Ganz besonders bevorzugt setzt man als Guanidiniumionen (IVv) solche ein, bei denen

- die Stickstoffatome in Ringstrukturen vorliegen; oder
- $R^1$ bis $R^5$ Methyl sind.

Als ganz besonders bevorzugtes Guanidiniumion (IVv) sei genannt N,N,N',N',N",N"-Hexamethylguanidinium.
Ganz besonders bevorzugt setzt man als Choliniumionen (IVw) solche ein, bei denen

- $R^1$ und $R^2$ unabhängig voneinander Methyl, Ethyl, 1-Butyl oder 1-Octyl sind und $R^3$ Methyl oder Ethyl, $_2$ ist;
- $R^1$ Methyl, Ethyl, 1-Butyl oder 1-Octyl ist, $R^2$ eine $-CH_2-CH_2-OR^4$-Gruppe ist und $R^3$ und $R^4$ unabhängig voneinander Methyl oder Ethyl, sind; oder
- $R^1$ eine $-CH_2-CH_2-OR^4$-Gruppe ist, $R^2$ eine $-CH_2-CH_2-OR^5$-Gruppe ist und $R^3$ bis $R^5$ unabhängig voneinander Methyl oder Ethyl, sind.

Besonders bevorzugte Choliniumionen (IVw) sind solche, bei denen $R^3$ ausgewählt ist aus Methyl, Ethyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.
Ganz besonders bevorzugt setzt man als Amidiniumionen (IVx) solche ein, bei denen die Stickstoffatome in einer Ringstruktur vorliegen.
Als ganz besonders bevorzugte Amidiniumionen (IVx) seien genannt eine einfach protonierte Form von 1,8-Diazabicyclo[5.4.0]undec-7-en (DBU) oder von 1,5-Diazabicyclo[4.3.0]non-5-en.
Ganz besonders bevorzugt setzt man als Phosphoniumionen (IVy) solche ein, bei denen

- $R^1$ bis $R^3$ unabhängig voneinander $C_1$-$C_{18}$-Alkyl, insbesondere Butyl, Isobutyl, 1-Hexyl oder 1-Octyl sind.

Unter den vorstehend genannten heterozyklischen Kationen sind die Pyridiniumionen, Pyrazolinium-, Pyrazoliumionen und die Imidazolinium- sowie die Imidazoliumionen bevorzugt. Weiterhin sind Ammoniumionen bevorzugt.

Insbesondere bevorzugt sind 1-Methylpyridinium, 1-Ethylpyridinium, 1-(1-Butyl)pyridini-um, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Do-decyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethyl-pyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridini-um, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium, 1-(1-Octyl)-2-methyl-3-ethylpyridinium, 1-(1-Dodecyl)-2-methyl-3-ethyl-pyridinium, 1-(1-Tetradecyl)-2-methyl-3-ethyl-pyridinium, 1-(1-Hexadecyl)-2-methyl-3-ethyl-pyridinium, 1-Methylimi-dazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methyl-imidazolium, 1,2-Dimethylimidazolium, 1,2,3-Trimethylimidazolium, 1-Ethyl-2,3-dime-thylimidazolium, 1-(1-Butyl)-2,3-dimethylimidazolium, 1-(1-Hexyl)-2,3-dimethylimidazo-lium und 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 1-(Prop-1-en-3-yl)-3-metyl-imidazolium.

Als Anionen sind prinzipiell alle Anionen einsetzbar.
Das Anion $[Y]^{n-}$ der ionischen Flüssigkeit ist bevorzugt ausgewählt aus

- der Gruppe der Halogenide
- der Gruppe der Carbonsäuren der allgemeinen Formel:

$$RCOO^{1--}$$

- der Gruppe der Carbonate und Kohlensäureester der allgemeinen Formel:

$$HCO_3^{1-},\ CO_3^{2-},\ RCO_3^{1-}$$

- der Gruppe der mehrwertigen Carbonsäuren der allgemeinen Formel:

$$R(COOH)_n(COO^-)_m$$

($n \geq 0$, $m > 0$)

- der Gruppe der aromatischen Hydroxylverbindungen der allgemeinen Formel:

$$R_mC_6H_n(OH)_p(O^-)_q$$

($m + n + p + q = 6$, $q > 0$).

Darin bedeuten R $C_1$-$C_{30}$-Alkyl, gegebenenfalls durch ein oder mehrere nicht-benachbarte Sauerstoff- und/oder Schwefelatome und/oder ein oder mehrere substituierte Iminogruppen unterbrochenes $C_2$-$C_{18}$-Alkyl, $C_6$-$C_{14}$-Aryl, $C_5$-$C_{12}$-Cycloalkyl oder einen fünf- bis sechsgliedrigen, Sauerstoff-, Stickstoff- und/oder Schwefelatome aufweisenden Heterozyklus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch geeignete funktionelle Gruppen, Aryl, Alkyl, Aryloxy, Alkyloxy, Halogen, Heteroatome und/oder Heterozyklen substituiert sein können.

Darin sind gegebenenfalls durch geeignete funktionelle Gruppen, Aryl, Alkyl, Aryloxy, Alkyloxy, Halogen, Heteroatome und/oder Heterozyklen substituiertes $C_1$-$C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hexadecyl, Octadecyl, 1,1-Dimethylpropyl, 1,1-Dimethylbutyl, 1,1,3,3-Tetramethylbutyl, Benzyl, 1-Phenylethyl, α,α-Dimethylbenzyl, Benzhydryl, p-Tolylmethyl, 1-(p-Butyl-phenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycar-bonylethyl, 2-Butoxy-carbonylpropyl, 1,2-Di-(methoxycarbonyl)-ethyl, 2-Methoxyethyl, 2-Ethoxyethyl, 2-Bu-toxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythio-ethyl, 2,2,2-Trifluorethyl, 2-Dimethylaminoethyl, 2-Dimethylaminopropyl, 3-Dimethyl-aminopropyl, 4-Dimethylaminobutyl, 6-Dimethylaminohexyl, 2-Phenoxyethyl, 2-Phen-oxypropyl, 3-Phenoxypropyl, 4-Phenoxybutyl, 6-Phenoxyhexyl, 2-Methoxyethyl, 2-Me-thoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Imino-gruppen unterbrochenes $C_2$-$C_{18}$-Alkyl sind beispielsweise 5-Methoxy-3-oxapentyl, 8-Methoxy-3,6-dioxa-octyl, 11-Methoxy-3,6,9-trioxaundecyl, 7-Methoxy-4-oxaheptyl, 11-Methoxy-4,8-dioxa-undecyl, 15-Methoxy-4,8,12-trioxapentadecyl, 9-Methoxy-5-oxano-nyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetra-decyl.

Die Anzahl der nicht-benachbarten Sauerstoff- und/oder Schwefelatome und/oder Iminogruppen ist grundsätzlich nicht beschränkt, bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methyl-imino-, iso-Propylimino, n-Butylimino oder tert-Butylimino sein.

Unter dem Begriff "funktionelle Gruppen" sind beispielsweise die folgenden zu verstehen: Di-($C_1$-$C_4$-Alkyl)-amino, $C_1$-$C_4$-Alkyloxycarbonyl, Cyano oder $C_1$-$C_4$-Alkoxy. Dabei ist $C_1$ bis $C_4$-Alkyl Methyl, Ethyl, Propyl, Isopropyl, n-Butyl, sec-Butyl oder tert.-Butyl.

Gegebenenfalls durch geeignete funktionelle Gruppen, Aryl, Alkyl, Aryloxy, Alkyloxy, Halogen, Heteroatome und/oder Heterozyklen substituiertes $C_6$-$C_{14}$-Aryl sind beispiels-weise Phenyl, Tolyl, Xylyl, $\alpha$-Naphthyl, $\beta$-Naphthyl, 4-Diphenylyl, Chlorphenyl, Dichlor-phenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Meth-oxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphe-nyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch geeignete funktionelle Gruppen, Aryl, Alkyl, Aryloxy, Halogen, Heteroatome und/oder Heterozyklen substituiertes $C_5$-$C_{12}$-Cycloalkyl sind beispielsweise Cyclopentyl, Cyclohexyl, Cyclooctyl, Cyclododecyl, Methylcyclopentyl, Dimethylcy-clopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bizyklisches System wie Norbornyl oder Norbornenyl.

Ein fünf- bis sechsgliedriger, Sauerstoff-, Stickstoff- und/oder Schwefelatome aufweisender Heterozyklus ist beispielsweise Furyl, Thiophenyl, Pyryl, Pyridyl, Indolyl, Benz-oxazolyl, Dioxolyl, Dioxyl, Benzimidazolyl, Benzthiazolyl, Dimethylpyridyl, Methylchinolyl, Dimethylpyryl, Methoxyfuryl, Dimethoxypyridyl, Diflourpyridyl, Methylthiophenyl, Isopropylthiophenyl oder tert.-Butylthiophenyl.

Besonders bevorzugte Anionen in den ionischen Flüssigkeiten sind die Halogenide, weiter bevorzugt Chlorid, Bromid und Jodid, und ganz besonders bevorzugt Chlorid.

Bevorzugt ist der Katalysator ausgewählt aus der Gruppe 1-Ethyl-3-methylimidazolium bromid (EMIM-Br), 1-Ethyl-3-methylimidazolium chlorid (EMIM-Cl), 1-Ethyl-3-methylimidazolium dicyandiamide (EMIM-DICY), 1-Ethyl-3-methylimidazolium Iodid (EMIM-I), 1-Ethyl-2,3-methylimidazolium bromide (EDMIM-Br), 1-Ethyl-3-methylimidazolium diethylphosphat, (EMIM-DEP), 1-Benzyl-3methylimidazolium chlorid (BEMIM-Cl), 1-Butyl-1methylpiperidinium chlorid (BMPM-Cl), 1-(2-hydroxyethyl)-3-methylimidazolium chlorid (HEMIM-Cl).

Besonders bevorzugt ist der Katalysator ausgewählt aus der Gruppe 1-Ethyl-3-methylimidazolium bromid (EMIM-Br), 1-Benzyl-3-methylimidazolium chlorid (BEMIM-Cl), 1-Butyl-1-methylpiperidinium chlorid (BMPM-Cl), 1-Butyl-3-methylpiperidinium chlorid (BMPM-Cl), 1-(2-hydroxyethyl)-3-methylimidazolium chlorid (HEMIM-Cl). In einer weiteren bevorzugten Ausführungsform werden zumindest zwei dieser Katalysatoren verwendet.

In einer weiteren bevorzugten Ausführungsform ist die ionischen Flüssigkeit eine Kombination aus Lewis-Säure und eine Lewis Base, wobei diese bevorzugt aus einer der oben genannten Bevorzugungen ausgewählt werden.

Co-Katalysatoren:

In anderen bevorzugten Ausführungsformen wird neben dem oben genannten Katalysator Harnstoff-Derivate als Co-Katalysator eingesetzt.

Die Verwendung von Harnstoffen als Co-Katalysatoren hilft bei der Umsetzung des Isocyanates mit dem Epoxid. Eine schnellere Umsetzung des Isocyanates ist vorteilhaft, da längere Verweilzeiten des Isocyanates im Reaktionsgemisch die Wahrscheinlichkeit der Trimersierung des Isocyanates erhöhen und somit die Chemoselektivität zur Oxazolidonbildung verschlechtern. Bevorzugte sind Harnstoffe, welche bei Zersetzung, z.B. bei Zuführung von Wärme, keine primären Amine abspalten.

Geeignete Co-Katalysatoren sind demnach Harnstoffderivate der folgenden Formel

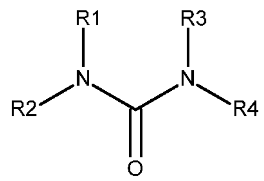

wobei

R1, R2, R3 und R4 Alkylreste sind mit unabhängig voneinander 1 bis 10 Kohlenstoffatomen oder
R1 und R2 Alkylreste sind mit unabhängig voneinander 1 bis 10 Kohlenstoffatomen und R3 ein Aryl-Rest und gleichzeitig R4 ein Wasserstoffatom oder R3 ein Aryl-Rest und R4 ein Wasserstoffatom ist.

Der Arylrest ist in einer bevorzugten Ausführungsform substituiert, bevorzugt mit einem weiteren Harnstoffrest. In anderen bevorzugten Ausführungsformen ist der Arylrest mit mehreren Harnstoffresten substituiert. Die entsprechenden Strukturen werden auch als Polyharnstoff angesprochen.

In anderen bevorzugten Ausführungsformen sind die Alkyl-Substituenten miteinander verbunden und weisen Ringstrukturen auf. Bevorzugte Beispiel hierfür sind 1,3-Dimethyl-3,4,5,6-tetrahydro-2(1H)-pyrimidinon und 1,3-Dimethyl-2-imidazolidinon.

Besonders bevorzugt sind Co-Katalysatoren ausgewählt aus der Gruppe 3,3'-(4-Methyl-1,3-phenylene) bis (1,1-dimethylurea) und 1,1-dimethyl-3-phenylurea. Kommerziell erhältliche Produkte dieser Klasse sind z.B. die Dimethylharnstoffe der Firma AlzChem, Handelsname Dyhard.

Polymerherstellung:

Das Diepoxid, das Diisocyanat sowie der Katalysator werden entsprechend der oben ausgeführten Aufzählung und Bevorzugungen eingesetzt.

In einem ersten Schritt wird das Epoxid und der Katalysator in einem Lösungsmittel aufgelöst und auf Reaktionstemperatur erhitzt. Die Reaktionstemperatur liegt bevorzugt in einem Bereich von 140 °C bis 220 °C, weiter bevorzugt bei 150 °C bis 200°C und besonders bevorzugt bei 160 °C bis 180°C.

Die Lösung wird mit Stickstoff inertisiert, Sauerstoff muss bei der Reaktion ausgeschlossen werden. Dann wird das Isocyanat unter Aufrechterhaltung der Reaktionstemperatur langsam zudosiert.

Der Gehalt an freiem Isocyanat in der Reaktionsmischung sollte so gering wie möglich gehalten werden, um die Trimerisierung des Isocyanats zu verhindern. Dies wird entweder über die Geschwindigkeit der Zudosierung des Isocyanats und/oder die Reaktivität, das heißt die Menge des zugesetzten Katalysators gesteuert.

In einer bevorzugten Ausführungsform ist der Wassergehalt der Reaktionsmischung kleiner als 0,1 Gew.-%. So wird insbesondere die Nebenreaktion des Isocyanats zu Harnstoff verhindert. Das Molverhältnis des Diepoxid zum Diisocyanat liegt in einem Bereich zwischen 1,0 : 0,5 bis 0,5 : 1,0, bevorzugt zwischen 1,0 : 0,9 bis 0,9 :1,0 und besonders bevorzugt bei 1,0 : 1,0.

Die Katalysatorkonzentration beträgt 0,05 Mol-% bis 5 Mol-% bezogen auf Epoxidgruppen, bevorzugt 0,05 Mol-% bis 2 Mol-%, und besonders bevorzugt 0,05 Mol-% bis 0,5 Mol-%.

Die Konzentration des Co-Katalysators beträgt 0,01 Mol-% bis 1000 Mol-% bezogen auf Epoxidgruppen des Diepoxids, bevorzugt 0,05 Mol-% bis 100 Mol-%, besonders bevorzugt 0,05 Mol-% bis 10 Mol-% und ins besondere 0,05 Mol-% bis 1 Mol-%.

In eine bevorzugten Ausführungsform wird der Co-Katalysator als Lösungsmittel für die Reaktanten eingesetzt, wobei in einer bevorzugten Ausführungsform der Co-Katalysator 1,3-Dimethyl-2-imidazolidon ist.

Die Lösungsmittel werden bevorzugt vor ihrer Verwendung getrocknet. In einer bevorzugten Ausführungsform erfolgt die Trockung durch ein Molekularsieb.

Geeignete Lösungsmittel sind aprotisch-polar, um nicht mit dem Isocyanat zu reagieren, bevorzugt Dichlorbenzol, bevorzugt 1,2, Dichlorbenzol, 1, 2, 3; 1, 2, 4 und 1,3,5 Trichlorbenzol, Sulfolan, Mesitylen, oder N-Methylpyrolidon. Ein besonders geeignetes Lösungsmittel ist Sulfolan (Tetrahydrothiophen-1,1-dioxid).

In einer anderen bevorzugten Ausführungsform wird der Katalysator, in einer weiter bevorzugt gemeinsam mit dem Co-Katalysator, im Lösungsmittel A vorgelegt und dann auf Reaktionstemperatur erhitzt. Das Lösungsmittel enthaltend den Katalysator, in der bevorzugten Ausführungsform den Katalysator und den Co-Katalysator, wird auch als Mischung A bezeichnet. Mischung A wird von Sauerstoff befreit, d.h. inertisiert, da sich Sauerstoff nachteilig auf die Reaktion auswirkt. In einer bevorzugten Ausführungsform erfolgt diese Inertisierung mit Stickstoff . Dann wird das Isocyanat mit dem Diepoxid in einem Lösungsmittel B homogen gemischt, was auch als Mischung B bezeichnet wird und unter Aufrechterhaltung der Reaktionstemperatur langsam der Mischung A, enthaltend den Katalysator, bevorzugt den Katalysator und den Co-Katalysator, zudosiert. Die Mischung aus Mischung A und Mischung B ist die Reaktionsmischung. In einer anderen bevorzugten Ausführungsform ist der Co-Katalysator in der Mischung B enthalten.

In einer weiteren bevorzugten Ausführungsform wird das Epoxid und der Katalysator vorgelegt, dann auf Reaktionstemperatur erhitzt und dann das Isocyanat zugegeben. Die Zugabe des Isocyanates erfolgt kontinuierlich oder diskontinuierlich, d.h. portionsweise. In diesem Verfahren wird bevorzugt wenig oder kein Lösungsmittel verwendet. Dadurch, können die Schmelzviskositäten sehr hoch werden, weshalb besonders geeignete Rührwerke verwendet werden müssen. Bevorzugte Beispiele für solche Rührwerke sind Extruder oder Plasti-Corder, wie sie beispielsweise von der Fa. Brabender angeboten werden.

Bei den genannten Verfahren ist es wichtig, den Gehalt an freiem Isocyanat in der Reaktionsmischung so gering wie möglich zu halten, um die Trimerisierung des Isocyanats zu verhindern. Dies wird durch mindestens eine der folgenden Merkmale gesteuert: die Geschwindigkeit der Zudosierung der Mischung B, die Reaktivität des Katalysators, die Reaktivität des Co-Katalysators, die Menge des zugesetzten Katalysators, die Menge des Co-Katalysators und/oder die Reaktionstemperatur.

Bevorzugt erfolgen die genannten Verfahren unter Ausschluss von Sauerstoff, da sich dieser nachteilig auf die Reaktion auswirkt.

Die Reaktionstemperatur der Verfahren liegt bevorzugt in einem Bereich von 140 °C bis 220 °C, weiter bevorzugt bei 150 °C bis 200°C und besonders bevorzugt bei 160 °C bis 180°C.

Verwendung

Die vorliegende Erfindung betrifft auch die Verwendung einer erfindungsgemäßen Polymere zur Herstellung von Anwendungen ausgewählt aus, Beschichtung, Dämpfungselement, Faltenbalg, Folie, Faser, Formkörper, Fußboden für Gebäude und Transport, non-woven Gewebe, bevorzugt Dichtung, Rolle, Schuhsohle, Schlauch, Kabel, Steckverbinder, Kabelstecker, Steckerteile, Kabelummantelung, Kissen, Laminat, Profil, Riemen, Sattel, Schaum, durch zusätzliches Schäumen der Zubereitung, Steckverbindung, Schleppkabel, Solarmodul, Verkleidung in Automobilen, Kabelbaumkomponenten, Schaltungsträger, Schaltungsträgerkomponenten, dreidimensional spritzgegossene Schaltungsträger, elektrische Verbindungselemente, mechatronische Komponenten, Modifizierer für thermoplastische Materialien, d.h. Substanz die die Eigenschaften eines anderen Materials beeinflusst. Jede dieser Verwendungen für sich genommen ist eine bevorzugte Ausführungsform, die auch als Anwendung bezeichnet wird. Das Polymer wird dafür bevorzugt in einem ersten Schritt als Granulat oder Pulver bereitgestellt. Die Anwendungen werden daraus bevorzugt durch Spritzguss, Kalandrieren, Pulversintern, oder Extrusion hergestellt.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informationstechnologie, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen, die einen erhöhten Brandschutz erfordern, angewandt werden.

Die folgenden Beispiele zeigen an beispielhaft die vorteilhafte Eigenschaft der Katalysatoren sowie deren Einsatz in einem erfindungsgemäßen Polymer. Die Beispiele sind in keiner Weise einschränkend für den Erfindungsgedanken.

Beispiele:

Einsatzstoffe:

o-Cresyl-glycidylether (CAS-Nr. 2210-79-9) Sigma-Aldrich
Napthyl-Isocyanat, (CAS-Nr. 86-84-0), Sigma-Aldrich
Bisphenol-A-Diglycidylether, (CAS-Nr. 1675-54-3), Sigma-Aldrich D 3415-250g 2,4-Toloyl-diisocyanat, (2,4-TDI) (CAS-Nr. 584-84-9), Sigma-Aldrich
N,N"-(4-Methyl-m-phenylen)bis[N',N'-dimethylharnstoff] (DYHARD® UR500)

(CAS-Nr. 17526-94-2), Alz Chem

Katalysatoren:

1-Ethyl-3-methylimidazolium chlorid (EMIM-Cl, CAS-Nr. 65039-09-0, Basionics St 80, BASF)
1-Ethyl-3-methylimidazolium dicyandiamid (EMIM-DICY, CAS-Nr. 370865-89-7, Basionics VS 03, BASF)
1-Ethyl-3-methylimidazolium ethylsulfat (EMIM-Et$OSO_3$, CAS-Nr. 342843-75-5, Basionics LQ 01, BASF)
1-Ethyl-3-methylimidazolium bromid (EMIM-Br, CAS-Nr. 65039-08-9, Fa. Iolitec)
1-Ethyl-3-methylimidazolium tosylat (EMIM-TOS, CAS-Nr. 328090-25-1, Fa. Iolitec)
1-Ethyl-3-methylimidazolium diethylphosphat, (EMIM-DEP, CAS-Nr. 848641-69-0, Fa. Iolitec)
1-Benzyl-3methylimidazolium chlorid (BEMIM-Cl, CAS-Nr. 36443-38-8, Fa. Iolitec)
1-Butyl-1methylpiperidinium chlorid (BMPM-Cl, CAS-Nr. 845790-13-8, Fa. Iolitec)
1-Butyl-3-methylimidazolium chlorid (BMIM-Cl, CAS-Nr. 79917-90-1, Fa. Iolitec)
1-(2-hydroxyethyl)-3methylimidazolium chlorid (HEMIM-Cl, CAS-Nr.61755-34-8, Fa. Iolitec)) Co-Katalysatoren:

N,N"-(4-Methyl-m-phenylen)bis[N',N'-dimethylharnstoff] (DYHARD® UR500)
(CAS-Nr. 17526-94-2), AlzChem

Lösungsmittel:

Sulfolan (CAS-Nr. 126-33-0 Merck, Nr. 845056), über Molekularsieb 4Å (Roth, Perlform) getrocknet
N,N-Dimethylacetamid (DMAC) (CAS-Nr. 127-19-5 Merck, Nr. 803235)
1,2-Dichlorbenzol (CAS-Nr. 95-50-1, Sigma-Aldrich)
Essigsäure (CAS-Nr. 64-19-7 Bernd Kraft, Nr. 16873.4000)
Modellreaktionen (zur Bestimmung der Selektivität der Katalysatoren):
In einem mit trockenem Stickstoff inertisierten 50ml-Dreihalskolben mit Thermofühler, Magnetrührer, Kühler, Septum und N2-Spülung über Kühler wurden 8,0 g (48,72 mMol) o-Cresyl-glycidylether (CAS-Nr. 2210-79-9, Sigma-Aldrich) eingewogen und mit 0,24 mMol (0,5 Mol-%) Katalysator versetzt. Die Mischung wurde mittels eines Ölbades unter Rührern auf 160°C erhitzt, dabei wurde der Katalysator vollständig gelöst. Anschließend wurde mittels Spritzenpumpe/Kanüle über das Septum 4,12 g (24,36 mMol) Naphthyl-Isocyanat (CAS-Nr. 86-84-0, Sigma-Aldrich) in 5 min. mit konstanter Dosierrate zugegeben. Unmittelbar nach Zugabe wurde eine Probe ca. 200-300μL der Reaktionsflüssigkeit mittels Spritze über das Septum entnommen und ein IR-Spektrum aufgenommen. Im Abstand von 0,5h, 1h, und weiter stündlich wurden weitere Proben entnommen und per IR untersucht. Nach vollständiger Umsetzung des Isocyanates, erkennbar an der Abnahme der IR-Bande bei 2256$cm^{-1}$ wurde eine weitere Stunde bei Reaktionstemperatur gerührt, dann wurde der Kolbeninhalt unter Rühren abgekühlt auf ca. 70°C und in eine Probeflasche abgefüllt. Es wurde eine Epoxidtitration (EEW) sowie eine GPC-Analyse durchgeführt (Lösungsmittel DMAC, Referenz ist synthetisch hergestelltes Trimer aus Naphtylisocyanat).

Tabelle 1

| Beispiel-Nr | Versuch | Katalysator | IR *), $R_{Ox/Tr}$ | IR, Min. NCO=0 | GPC % Oxazolidon | GPC % Isocyanurat | EEW |
|---|---|---|---|---|---|---|---|
| 1 | 24 | EMIM-Cl | 0,80 | 0 | 100 | 0 | 1235 |
| 2 | 30 | EMIM-DICY | 0,79 | 0 | 100 | 0 | 1059 |
| 3 | 33 | EMIM-E-t$OSO_3$ | 0,61 | 540 | 64 | 36 | 681 |
| 4 | 39 | EMIM-Br | 0,78 | 30 | 100 | 0 | 704 |
| 5 | 42 | EMIM-tos | 0,63 | 240 | 77 | 23 | 468 |
| 6 | 43 | EMIM-DEP | 0,83 | 0 | 100 | 0 | 905 |
| 7 | 51 | BEMIM-Cl | 0,80 | 0 | 100 | 0 | 721 |

(fortgesetzt)

| Beispiel-Nr | Versuch | Katalysator | IR *), R $_{Ox/Tr}$ | IR, Min. NCO=0 | GPC % Oxazolidon | GPC % Isocyanurat | EEW |
|---|---|---|---|---|---|---|---|
| 8 | 53 | BMPM-Cl | 0,81 | 0 | 100 | 0 | 649 |
| 9 | 54 | BMIM-Cl | 0,79 | 0 | 100 | 0 | 970 |
| 10 | 50 | HEMIM-Cl | 0,79 | 30 | 100 | 0 | 927 |
| IR $R_{Ox/Tr}$ ist das über IR bestimmte Verhältnis von Oxazolidon zu Trimer (Isocynaurat)<br>EEW = Epoxi-Äquivalentgewicht (epoxi-equivivalent weight) ist ein Maß für die Nebenreaktion der Epoxi-Homopolymerisation. | | | | | | | |

Die Tabelle zeigt, dass die Katalysatoren der Beispiel 4, 7, 8, 9 und 10 zu besonders guten Polymereigenschaften führen. Diese sind daher bevorzugt.

Beispiel 11 - Polymerreaktion

In einem mit trockenem Stickstoff inertisierten 100 ml Dreihals-Rundkolben, ausgestattet mit Magnetrührer, Kühler, Thermofühler und Septum, wurden 10,0 g (28,6 mMol) Bisphenol-A-Diglycidylether (CAS-Nr. 1675-54-3, Sigma-Aldrich D 3415-250g) und 20,9 mg (0,143 mMol) 1-Ethyl-3-methylimidazolium-chlorid (EMIM-Cl, Basionics St 80, Fa. BASF, CAS-Nr. 65039-09-0) eingewogen und in 58,24 g Sulfolan gelöst. Die Lösung wurde unter N2-Spülung auf 160°C erhitzt. In 60 min. wurden mittels Spritzenpumpe/Kanüle 4,54 g (26,1 mMol) 2,4-TDI (CAS-Nr. 584-84-9, Sigma-Aldrich) kontinuierlich unter Rühren zudosiert. Nach vollständiger Zugabe wurde eine Probe von ca. 200-300µl mittels Spritze entnommen und im IR untersucht. In regelmäßigen Abständen wurden Proben entnommen, nach vollständiger Umsetzung des Isocyanates, erkennbar an der Abnahme der IR-Bande bei 2256cm-1 wurde eine weitere Stunde bei Reaktionstemperatur gerührt, dann die Lösung auf ca. 50°C abgekühlt und langsam unter kräftigem Rühren in 400 mL Ethanol/Wasser-Gemisch (80/20 v/v) gegeben. Dabei fiel das gebildete Polymer aus und konnte per Vakuumfiltration abgetrennt werden. Das Polymer wurde 2x mit je 100 mL Ethanol über Filter aufgereinigt und anschließend in einer Petrieschale im Vakuumtrockenschrank bei ca. 50°C bis zur Massenkonstanz getrocknet. Es wurde ein weißes, feines Pulver, welches in DMAC klar löslich war, mit folgenden Kenndaten erhalten:

Reaktivität ($t_{NCO}$= 0, min.): 300 min
Mn (GPC): 2591 g/Mol
Tg (DSC): 178°C
$R_{ox/trimer}$ (IR): 0,62
Schmelzbereich: 150-160°C (Kofler)

Beispiel 12 - Polymerreaktion

In einem mit trockenem Stickstoff inertisierten 100 ml Dreihals-Rundkolben, ausgestattet mit Magnetrührer, Kühler, Thermofühler und Septum, wurden 10,0g (28,6 mmol) Bisphenol-A-Diglycidylether (CAS-Nr. 1675-54-3, Sigma-Aldrich D 3415-250g), 27,3 mg (0,143mmol) 1-Ethyl-3-methylimidazolium-bromide (EMIM-Br, Fa. Iolitec, CAS-Nr. 65039-08-9) und 7,5mg (0,0284mmol) N,N''-(4-Methyl-m-phenylen)bis[N',N'-dimethylharnstoff] (DYHARD® UR500, Alz Chem, CAS-Nr. 17526-94-2) eingewogen und in 59,94g Sulfolan gelöst. Die Lösung wurde unter N2-Spülung auf 160°C erhitzt. In 60 min. wurden mittels Spritzenpumpe/Kanüle 4,95g (28,4 mmol) 2,4-TDI (CAS-Nr. 584-84-9, Sigma-Aldrich) kontinuierlich unter Rühren zudosiert. Nach vollständiger Zugabe wurde eine Probe mittels Spritze entnommen und im IR untersucht. In regelmäßigen Abständen wurden Proben entnommen, nach vollständiger Umsetzung des Isocyanates, erkennbar an der Abnahme der IR-Bande bei 2256cm-1 wurde eine weitere Stunde bei Reaktionstemperatur gerührt, dann die Lösung auf ca. 50°C abgekühlt und langsam unter kräftigem Rühren in 400 ml Ethanol/Wasser-Gemisch (80/20 v/v) gegeben. Dabei fiel das gebildete Polymer aus und konnte per Vakuumfiltration abgetrennt werden. Das Polymer wurde 2x mit je 100 ml Ethanol aufgereinigt und anschließend in einer Petrieschale im Vakuumtrockenschrank bei ca. 50°C bis zur Massenkonstanz getrocknet. Es wurde ein weißes, feines Pulver, welches in DMAC klar löslich war, mit folgenden Kenndaten erhalten:

Reaktivität ($t_{NCO}$= 0, min.): 90 min.
Mn (GPC): 6344
Tg (DSC): 179°C

Rox/trimer (IR): 0,69

Beispiel 13 - Polymerreaktion, bevorzugte Ausführungsform

In einem mit trockenem Stickstoff inertisierten 500 ml Dreihals-Rundkolben, ausgestattet mit KPG-Rührer, Kühler, Thermofühler Tropftrichter und Septum, wurden 135,9g Sulfolan sowie 0,1372 g (71,5 mmol) 1-Butyl-1methylpiperidiniumchlorid (BMPM-Cl, CAS-Nr. 845790-13-8) und 0,0378 g (14,3 mmol) N,N"-(4-Methyl-m-phenylen)bis[N',N'-dimethylharnstoff] (DYHARD® UR500, Alz Chem, CAS-Nr. 17526-94-2) eingewogen und auf 175 °C erhitzt, dabei wurden die Katalysatoren vollständig aufgelöst. In einem separaten Behälter wurden 50,0 g (0,1431 mol) Bisphenol-A-Diglycidylether (CAS-Nr. 1675-54-3) und 23,7 g (0,1359 mol) 2,4-TDI (CAS-Nr. 584-84-9) mit 36,4 g 1,2-Dichlorbenzol gemischt und die Mischung unter Rühren bei RT homogenisiert. Die Mischung wurde in den Tropftrichter überführt und über 90 min. zu der Katalysatorlösung mit konstanter Dosiergeschwindigkeit zudosiert. Nach vollständiger Zugabe wurde eine Probe mittels Spritze entnommen und im IR untersucht. Es wurde ein deutlicher Peak für die Oxazolidonbande (1750cm-1) sowie kein Signal für freies Isocyanat (2256cm-1) beobachtet. Die Reaktionslösung wurde eine weitere Stunde bei Reaktionstemperatur gerührt, dann auf ca. 80°C abgekühlt und langsam unter kräftigem Rühren in 1000 ml Ethanol/Wasser-Gemisch (80/20 v/v) gegeben. Dabei fiel das gebildete Polymer aus und konnte per Vakuumfiltration abgetrennt werden. Das Polymer wurde 2x mit je 100 ml Ethanol gewaschen und anschließend in einer Petrieschale im Vakuumtrockenschrank bei ca. 80°C bis zur Massenkonstanz getrocknet. Das erhaltene Pulver wurde anschließend in 200 ml Dichlormethan gelöst und erneut in 800ml Ethanol ausgefällt. Das Polymer wurde abfiltriert und zwei Mal mit je 100 ml Ethanol aufgeschlämmt und filtriert. Das so erhaltene Polymer-Pulver wurde anschließend bei 160°C im Vakuumtrockenschrank über 4h getrocknet. Es wurde ein weißes, feines Pulver, welches in DMAC klar löslich war, mit folgenden Kenndaten erhalten:

Reaktivität ($t_{NCO}$= 0, min.): nach vollständiger Zugabe der Lösung
Mn (GPC): 11865
Tg (DSC): 179°C
$R_{ox/trimer}$ (IR): 0,71

Beispiel 14 - Bestimmung der Chemoselektivität des Katalysators (R):

Die Chemoselektivität der Katalyse in Hinblick auf die Oxazolidonbildung wird beurteilt durch die Auswertung der IR-Signale für Oxazolidon (1750cm$^{-1}$) und Isocyanurat (1705cm$^{-1}$) gemäß folgender Formel:

$$R\,(ox\!:trimer) = peak\ H\,\frac{Ox}{peak\ H\ Ox + peak\ H\ trimer}$$

Beispiel 15 - Bestimmung der Epoxidzahl (%EpO)

Zur Charakterisierung des Gehalts von Verbindungen an Oxirangruppen ("Epoxidgruppen") wurde eine Epoxidtitration durchgeführt. Die dabei erhaltene Epoxidzahl (%EpO) gibt an, wieviel Gramm Oxiran-Sauerstoff in 100 Gramm einer Probe enthalten sind.

Als Indikator setzt man Kristallviolett ein. Die Bestimmung setzt die Abwesenheit von Wasser, Basen und Aminen voraus.

Reagentien:

(1) 0,1-N-Perchlorsäure (Fa. Merck) in Eisessig
(2) Tetraethylammoniumbromid (Fa. Fluka) in Form einer Lösung von 100 g Tetraethylammoniumbromid in 400 ml Eisessig
(3) Kristallviolett (Fa. Merck); zur Herstellung der Indikatorlösung wurden 0,2 g Kristallviolett in 100 mL Eisessig gelöst.

Durchführung:

0,2 bis 0,5 g der Probe, die Oxiranringe enthält werden in einem Erlenmeyerkolben vorgelegt. Die Probe wird

in 50 ml wasserfreiem Aceton gelöst. Dann fügt man 10 ml Tetraethylammoniumbromidlösung (siehe oben) und 3 Tropfen Kristallviolettlösung (siehe oben) hinzu. Die Mischung wird mit einer 0,1-N Lösung von Perchlorsäure in Eisessig titriert. Der Endpunkt ist erreicht, sobald die Farbe sich von blau nach grün ändert.

Vor Durchführung der eigentlichen Titration führt man eine Blindprobe durch (diese enthält keine Oxiranverbindung), um Meßfehler auszuschließen.

Auswertung:

Der Epoxidgehalt %EpO wird wie folgt berechnet: % EpO=[(a-b)+0,160]/ E

a: = Verbrauch ml 0,1N Perchlorsäure bei Titration
b:: = Verbrauch ml 0,1N Perchlorsäure bei Blindprobe
E: = Einwaage Probe in Gramm

Das Epoxid-Äquivalentgewicht (EEW) errechnet sich nach der folgenden Formel:

$$EEW = 1600 / \% EpO$$

Die Dimension des EEW ist g/äq.

Die Reaktivität ist der Zeitraum nachdem eine Probe im IR kein sichtbares Signal der Isocyanatbande (2256 $cm^{-1}$) mehr ergibt

## Patentansprüche

1. Thermoplastisches Polymer hergestellt zumindest aus Diisocyanat und Diepoxid unter Verwendung eines Katalysators, wobei der Katalysator eine ionische Flüssigkeit ist, welche
ein oder mehrere Salz(e) mit der folgenden Formel (I) umfasst:

$$[A]_n^+ \ [Y]^{n-} \qquad (I),$$

in der

n für 1, 2, 3 oder 4 steht,
$[A]^+$ für ein quartäres Ammonium-Kation steht, welches mindestens einen fünf- bis sechsgliedrigen Heterozyklus enthält, der mindestens ein Stickstoffatom sowie gegebenenfalls ein Sauerstoff- oder Schwefelatom aufweist, wobei das Stickstoffatom des Heterozykus' mit $C_1$-$C_{18}$-Alkyl quaternisiert ist; und
$[Y]^{n-}$ für ein ein-, zwei-, drei- oder vierwertiges Anion steht.

2. Polymer nach Anspruch 1, wobei der Katalysator ausgewählt ist aus der Gruppe 1-Ethyl-3-methylimidazolium bromid (EMIM-Br), 1-Ethyl-3-methylimidazolium chlorid (EMIM-Cl), 1-Ethyl-3-methylimidazolium dicyandiamide (EMIM-DICY), 1-Ethyl-3-methylimidazolium Iodid (EMIM-I), 1-Ethyl-3-methylimidazolium diethylphosphat, (EMIM-DEP), 1-Benzyl-3methylimidazolium chlorid (BEMIM-Cl), 1-Butyl-1methylpiperidinium chlorid (BMPM-Cl), 1-(2-hydroxyethyl)-3-methylimidazolium chlorid (HEMIM-Cl) und Mischungen von zwei oder mehr dieser Katalysatoren.

3. Polymer nach Anspruch 1 oder 2 wobei der Katalysator ausgewählt ist aus der Gruppe 1-Ethyl-3-methylimidazolium bromid (EMIM-Br), 1-Benzyl-3-methylimidazolium chlorid (BEMIM-Cl), 1-Butyl-1-methylpiperidinium chlorid (BMPM-Cl), 1-(2-hydroxyethyl)-3-methylimidazolium chlorid (HEMIM-Cl), und Mischungen von zwei oder mehr dieser Katalysatoren.

4. Polymer nach einem der vorhergehenden Ansprüche, wobei zusätzlich zu dem Katalysator ein Co-Katalysator verwendet wird, der bevorzugt ein Harnstoff-Derivat ist.

5. Polymer nach einem der vorhergehenden Ansprüche, wobei das Diepoxid ausgewählt ist aus der Gruppe Diepoxid basierend auf Diglycidylether von Bisphenol A, Bisphenol F oder einer Mischung aus beiden.

6. Polymer nach einem der vorhergehenden Ansprüche, wobei als Diepoxid eine Mischung aus Diglycidylether von Bisphenol A oder Bisphenol F, oder eine Mischung aus beiden, in Kombination mit einem Diglycidylether basierend auf Cardanol verwendet wird.

7. Polymer nach einem der vorhergehenden Ansprüche, wobei das Diisocyanat ein aromatisches Diisocyanat ist, bevorzugt Toluylendiisocyanat (TDI), 1,5-Naphthylendiisocyanat (NDI), oder Diphenylmethandiisocyanat (MDI) oder eine Mischung aus mindestens zwei dieser Isocyanate.

8. Verfahren zur Herstellung eines Polymers nach einem der vorhergehenden Ansprüche zumindest aus Diisocyanat und Diepoxid unter Verwendung eines Katalysators, wobei der Katalysator eine ionische Flüssigkeit ist, welche ein oder mehrere Salz(e) mit der folgenden Formel (I) umfasst

$$[A]_n^+ \ [Y]^{n-} \qquad (I),$$

in der

n für 1, 2, 3 oder 4 steht,
$[A]^+$ für ein quartäres Ammonium-Kation steht, welches mindestens einen fünf- bis sechsgliedrigen Heterozyklus enthält, der mindestens ein Stickstoffatom sowie gegebenenfalls ein Sauerstoff- oder Schwefelatom aufweist, wobei das Stickstoffatom des Heterozykus' mit $C_1$-$C_{18}$-Alkyl quaternisiert ist; und
$[Y]^{n-}$ für ein ein-, zwei-, drei- oder vierwertiges Anion steht;

wobei

- das Diepoxid und der Katalysator, auf Reaktionstemperatur erhitzt werden und
- dann das Diisocyant zudosiert wird.

9. Verfahren zur Herstellung eines Polymers nach einem der Ansprüche 1 bis 7, zumindest aus Diisocyanat und Diepoxid unter Verwendung eines Katalysators, wobei der Katalysator eine ionische Flüssigkeit ist, welche ein oder mehrere Salz(e) mit der folgenden Formel (I) umfasst

$$[A]_n^+ \ [Y]^{n-} \qquad (I),$$

in der

n für 1, 2, 3 oder 4 steht,
$[A]^+$ für ein quartäres Ammonium-Kation steht, welches mindestens einen fünf- bis sechsgliedrigen Heterozyklus enthält, der mindestens ein Stickstoffatom sowie gegebenenfalls ein Sauerstoff- oder Schwefelatom aufweist, wobei das Stickstoffatom des Heterozykus' mit $C_1$-$C_{18}$-Alkyl quaternisiert ist; und
$[Y]^{n-}$ für ein ein-, zwei-, drei- oder vierwertiges Anion steht;

wobei

- der Katalysator in einem Lösungsmittel aufgelöst wird, mit dem Lösungsmittel auf Reaktionstemperatur erhitzt wird und
- ein Gemisch des Diisocyanats mit dem Diepoxid zudosiert wird.

10. Verfahren nach Anspruch 8 oder 9, wobei die Reaktion unter Ausschluss von Sauerstoff erfolgt.

11. Verfahren nach einem der vorhergehenden Ansprüche, wobei die Reaktionstemperatur in einem Bereich von 140 °C bis 220 °C, weiter bevorzugt bei 150 °C bis 200°C und besonders bevorzugt bei 160 °C bis 180°C liegt.

12. Verfahren nach einem der vorhergehenden Ansprüche, wobei das Molverhältnis des Diepoxids zum Diisocyanat in einem Bereich zwischen 1,0 : 0,5 bis 0,5 : 1,0 liegt, bevorzugt zwischen 1,0 : 0,9 bis 0,9 :1,0 und besonders bevorzugt bei 1,0 : 1,0.

**13.** Verfahren nach einem der vorhergehenden Ansprüche, wobei die Katalysatorkonzentration 0,05 Mol-% bis 5,0 Mol-% bezogen auf Epoxidgruppen des Diepoxids beträgt, bevorzugt 0,05 Mol-% bis 1 Mol-% und besonders bevorzugt 0,05 Mol-% bis 0,5 Mol-%.

**14.** Verfahren nach einem der vorhergehenden Ansprüche, wobei die Konzentration des Co-Katalysators 0,01 Mol-% bis 1000 Mol-% bezogen auf Epoxidgruppen des Diepoxids beträgt, bevorzugt 0,05 Mol-% bis 100 Mol-% und besonders bevorzugt 0,05 Mol-% bis 1 Mol-%.

**15.** Verwendung eines Polymers nach einem der Ansprüche 1 bis 7 für die Herstellung eines Formkörpers durch Spritzguss, Kalandrieren, Pulversintern, Lasersintern, Schmelzpressen oder Extrusion; oder als Modifizierer für thermoplastisches Material.

## Claims

**1.** A thermoplastic polymer prepared at least from diisocyanate and diepoxide with the use of a catalyst, wherein the catalyst is an ionic liquid which comprises one or more salt(s) having the following formula (I):

$$[A]_n^+ \, [Y]^{n-} \qquad (I),$$

in which

n is 1, 2, 3 or 4,
$[A]^+$ is a quaternary ammonium cation which comprises at least one five- to six-membered heterocycle having at least one nitrogen atom and optionally an oxygen or sulfur atom, wherein the nitrogen atom of the heterocycle has been quaternized with $C_1$-$C_{18}$ alkyl; and
$[Y]^{n-}$ is a monovalent, divalent, trivalent or tetravalent anion.

**2.** The polymer according to claim 1, wherein the catalyst is selected from the group of 1-ethyl-3-methylimidazolium bromide (EMIM-Br), 1-ethyl-3-methylimidazolium chloride (EMIM-Cl), 1-ethyl-3-methylimidazolium dicyandiamide (EMIM-DICY), 1-ethyl-3-methylimidazolium iodide (EMIM-I), 1-ethyl-3-methylimidazolium diethylphosphate (EMIM-DEP), 1-benzyl-3-methylimidazolium chloride (BEMIM-Cl), 1-butyl-1-methylpiperidinium chloride (BMPM-Cl), 1-(2-hydroxyethyl)-3-methylimidazolium chloride (HEMIM-Cl) and mixtures of two or more of these catalysts.

**3.** The polymer according to claim 1 or 2, wherein the catalyst is selected from the group of 1-ethyl-3-methylimidazolium bromide (EMIM-Br), 1-benzyl-3-methylimidazolium chloride (BEMIM-Cl), 1-butyl-1-methylpiperidinium chloride (BMPM-Cl), 1-(2-hydroxyethyl)-3-methylimidazolium chloride (HEMIM-Cl), and mixtures of two or more of these catalysts.

**4.** The polymer according to any of the preceding claims, wherein a co-catalyst which is preferably a urea derivative is used in addition to the catalyst.

**5.** The polymer according to any of the preceding claims, wherein the diepoxide is selected from the group of diepoxide based on diglycidyl ethers of bisphenol A, bisphenol F or a mixture of the two.

**6.** The polymer according to any of the preceding claims, wherein the diepoxide used is a mixture of diglycidyl ether of bisphenol A or bisphenol F, or a mixture of the two, in combination with a diglycidyl ether based on cardanol.

**7.** The polymer according to any of the preceding claims, wherein the diisocyanate is an aromatic diisocyanate, preferably tolylene diisocyanate (TDI), naphthylene 1,5-diisocyanate (NDI) or diphenylmethane diisocyanate (MDI) or a mixture of at least two of these isocyanates.

**8.** A process for preparing a polymer according to any of the preceding claims at least from diisocyanate and diepoxide with the use of a catalyst, wherein the catalyst is an ionic liquid which
comprises one or more salt(s) having the following formula (I)

$$[A]_n^+ [Y]^{n-} \quad (I),$$

in which

n is 1, 2, 3 or 4,
$[A]^+$ is a quaternary ammonium cation which comprises at least one five- to six-membered heterocycle having at least one nitrogen atom and optionally an oxygen or sulfur atom, wherein the nitrogen atom of the heterocycle has been quaternized with $C_1$-$C_{18}$ alkyl; and
$[Y]^{n-}$ is a monovalent, divalent, trivalent or tetravalent anion;

wherein

- the diepoxide and the catalyst are heated to reaction temperature and
- the diisocyanate is then metered in.

**9.** A process for preparing a polymer according to any of claims 1 to 7 at least from diisocyanate and diepoxide with the use of a catalyst, wherein the catalyst is an ionic liquid which comprises one or more salt(s) having the following formula (I)

$$[A]_n^+ [Y]^{n-} \quad (I),$$

in which

n is 1, 2, 3 or 4,
$[A]^+$ is a quaternary ammonium cation which comprises at least one five- to six-membered heterocycle having at least one nitrogen atom and optionally an oxygen or sulfur atom, wherein the nitrogen atom of the heterocycle has been quaternized with $C_1$-$C_{18}$ alkyl; and
$[Y]^{n-}$ is a monovalent, divalent, trivalent or tetravalent anion;

wherein

- the catalyst is dissolved in a solvent, is heated with the solvent to reaction temperature, and
- a mixture of the diisocyanate with the diepoxide is metered in.

**10.** The process according to claim 8 or 9, wherein the reaction is effected with the exclusion of oxygen.

**11.** The process according to any of the preceding claims, wherein the reaction temperature is in a range from 140°C to 220°C, further preferably is 150°C to 200°C and particularly preferably is 160°C to 180°C.

**12.** The process according to any of the preceding claims, wherein the molar ratio of the diepoxide to the diisocyanate is in a range from 1.0:0.5 to 0.5:1.0, preferably from 1.0:0.9 to 0.9:1.0 and particularly preferably is 1.0:1.0.

**13.** The process according to any of the preceding claims, wherein the catalyst concentration is 0.05 mol% to 5.0 mol%, based on epoxide groups of the diepoxide, preferably 0.05 mol% to 1 mol% and particularly preferably 0.05 mol% to 0.5 mol%.

**14.** The process according to any of the preceding claims, wherein the concentration of the co-catalyst is 0.01 mol% to 1000 mol%, based on epoxide groups of the diepoxide, preferably 0.05 mol% to 100 mol% and particularly preferably 0.05 mol% to 1 mol%.

**15.** The use of a polymer according to any of claims 1 to 7 for the production of a shaped article by injection molding, calendering, powder sintering, laser sintering, melt pressing or extrusion; or as a modifier for thermoplastic material.

## Revendications

1. Polymère thermoplastique préparé au moins à partir d'un diisocyanate et d'un diépoxyde en utilisant un catalyseur, le catalyseur étant un liquide ionique, qui comprend un ou plusieurs sels de formule suivante (I) :

$$[A]_n^+ \quad [Y]^{n-} \qquad\qquad (I),$$

dans laquelle

n représente 1, 2, 3 ou 4,
$[A]^+$ représente un cation ammonium quaternaire, qui contient au moins un hétérocycle à cinq ou six chaînons, qui présente au moins un atome d'azote ainsi qu'éventuellement un atome d'oxygène ou de soufre, l'atome d'azote de l'hétérocycle étant quaternisé avec $C_{1-18}$-alkyle ; et
$[Y]^{n-}$ représente un anion monovalent, divalent, trivalent ou tétravalent.

2. Polymère selon la revendication 1, le catalyseur étant choisi dans le groupe du bromure de 1-éthyl-3-méthylimidazolium (EMIM-Br), du chlorure de 1-éthyl-3-méthylimidazolium (EMIM-Cl), du dicyandiamide de 1-éthyl-3-méthylimidazolium (EMIM-DICY), de l'iodure de 1-éthyl-3-méthylimidazolium (EMIM-I), du diéthylphosphate de 1-éthyl-3-méthylimidazolium, (EMIM-DEP), du chlorure de 1-benzyl-3-méthylimidazolium (BEMIM-Cl), du chlorure de 1-butyl-1-méthylpipéridinium (BMPM-Cl), du chlorure de 1-(2-hydroxyéthyl)-3-méthylimidazolium (HEMIM-Cl) et des mélanges de deux ou plus de ces catalyseurs.

3. Polymère selon la revendication 1 ou 2, le catalyseur étant choisi dans le groupe du bromure de 1-éthyl-3-méthylimidazolium (EMIM-Br), du chlorure de 1-benzyl-3-méthylimidazolium (BEMIM-Cl), du chlorure de 1-butyl-1-méthylpipéridinium (BMPM-Cl), du chlorure de 1-(2-hydroxyéthyl)-3-méthylimidazolium (HEMIM-Cl) et des mélanges de deux ou plus de ces catalyseurs.

4. Polymère selon l'une quelconque des revendications précédentes, un co-catalyseur étant utilisé en plus du catalyseur, lequel est préférablement un dérivé d'urée.

5. Polymère selon l'une quelconque des revendications précédentes, le diépoxyde étant choisi dans le groupe d'un diépoxyde à base d'éther de diglycidyle de bisphénol A, de bisphénol F ou d'un mélange des deux.

6. Polymère selon l'une quelconque des revendications précédentes, un mélange d'éther de diglycidyle de bisphénol A ou de bisphénol F, ou un mélange des deux, en combinaison avec un éther de diglycidyle à base de cardanol étant utilisé en tant que diépoxyde.

7. Polymère selon l'une quelconque des revendications précédentes, le diisocyanate étant un diisocyanate aromatique, préférablement le diisocyanate de toluylène (TDI), le diisocyanate de 1,5-naphtalène (NDI), ou le diisocyanate de diphénylméthane (MDI) ou un mélange d'au moins deux de ces isocyanates.

8. Procédé pour la préparation d'un polymère selon l'une quelconque des revendications précédentes au moins à partir d'un diisocyanate et d'un diépoxyde en utilisant un catalyseur, le catalyseur étant un liquide ionique, qui comprend un ou plusieurs sels de formule suivante (I)

$$[A]_n^+ \quad [Y]^{n-} \qquad\qquad (I),$$

dans laquelle

n représente 1, 2, 3 ou 4,
$[A]^+$ représente un cation ammonium quaternaire, qui contient au moins un hétérocycle à cinq ou six chaînons, qui présente au moins un atome d'azote ainsi qu'éventuellement un atome d'oxygène ou de soufre, l'atome d'azote de l'hétérocycle étant quaternisé avec $C_{1-18}$-alkyle ; et
$[Y]^{n-}$ représente un anion monovalent, divalent, trivalent ou tétravalent ;

- le diépoxyde et le catalyseur étant chauffés à la température de réaction et
- puis le diisocyanate étant ajouté.

**9.** Procédé pour la préparation d'un polymère selon l'une quelconque des revendications 1 à 7, au moins à partir d'un diisocyanate et d'un diépoxyde en utilisant un catalyseur, le catalyseur étant un liquide ionique, qui comprend un ou plusieurs sels de formule suivante (I)

$$[A]_n^+ \ [Y]^{n-} \qquad (I),$$

dans laquelle

n représente 1, 2, 3 ou 4,
$[A]^+$ représente un cation ammonium quaternaire, qui contient au moins un hétérocycle à cinq ou six chaînons, qui présente au moins un atome d'azote ainsi qu'éventuellement un atome d'oxygène ou de soufre, l'atome d'azote de l'hétérocycle étant quaternisé avec $C_{1-18}$-alkyle ; et
$[Y]^{n-}$ représente un anion monovalent, divalent, trivalent ou tétravalent ;
- le catalyseur étant dissous dans un solvant, chauffé avec le solvant à la température de réaction et
- un mélange du diisocyanate avec le diépoxyde étant ajouté.

**10.** Procédé selon la revendication 8 ou 9, la réaction étant réalisée sous exclusion d'oxygène.

**11.** Procédé selon l'une quelconque des revendications précédentes, la température de réaction se situant dans une plage de 140 °C à 220 °C, plus préférablement de 150 °C à 200 °C et particulièrement préférablement de 160 °C à 180 °C.

**12.** Procédé selon l'une quelconque des revendications précédentes, le rapport molaire du diépoxyde sur le diisocyanate se situant dans une plage entre 1,0:0,5 et 0,5:1,0, préférablement entre 1,0:0,9 et 0,9:1,0 et particulièrement préférablement étant de 1,0:1,0.

**13.** Procédé selon l'une quelconque des revendications précédentes, la concentration de catalyseur étant de 0,05 % en moles à 5,0 % en moles par rapport aux groupes époxyde du diépoxyde, préférablement de 0,05 % en moles à 1 % en moles et particulièrement préférablement de 0,05 % en moles à 0,5 % en moles.

**14.** Procédé selon l'une quelconque des revendications précédentes, la concentration du co-catalyseur étant de 0,01 % en moles à 1 000 % en moles par rapport aux groupes époxyde du diépoxyde, préférablement de 0,05 % en moles à 100 % en moles et particulièrement préférablement de 0,05 % en moles à 1 % en moles.

**15.** Utilisation d'un polymère selon l'une quelconque des revendications 1 à 7 pour la préparation d'un corps moulé par moulage par injection, par calandrage, par frittage de poudre, par frittage laser, par compression de masse fondue ou par extrusion ; ou en tant que modificateur pour un matériau thermoplastique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102014226838 A1
- WO 2015173111 A1
- WO 2015173110 A1
- US 20140121299 A
- WO 2014076024 A1
- DE 10202838 A1

### In der Beschreibung aufgeführte Nicht-Patentliteratur

- *Angew. Chem.,* 2000, vol. 112, 3926-3945
- *CHEMICAL ABSTRACTS,* 2210-79-9
- *CHEMICAL ABSTRACTS,* 86-84-0
- *CHEMICAL ABSTRACTS,* 1675-54-3
- *CHEMICAL ABSTRACTS,* 584-84-9
- *CHEMICAL ABSTRACTS,* 17526-94-2
- *CHEMICAL ABSTRACTS,* 65039-09-0
- *CHEMICAL ABSTRACTS,* 370865-89-7
- *CHEMICAL ABSTRACTS,* 342843-75-5
- *CHEMICAL ABSTRACTS,* 65039-08-9
- *CHEMICAL ABSTRACTS,* 328090-25-1
- *CHEMICAL ABSTRACTS,* 848641-69-0
- *CHEMICAL ABSTRACTS,* 36443-38-8
- *CHEMICAL ABSTRACTS,* 845790-13-8
- *CHEMICAL ABSTRACTS,* 79917-90-1
- *CHEMICAL ABSTRACTS,* 61755-34-8
- *CHEMICAL ABSTRACTS,* 126-33-0
- *CHEMICAL ABSTRACTS,* 127-19-5
- *CHEMICAL ABSTRACTS,* 95-50-1
- *CHEMICAL ABSTRACTS,* 64-19-7